(19) Europäisches Patentamt
European Patent Office
Office européen des brevets

(11) Publication number: **0 392 065 B1**

(12) # EUROPEAN PATENT SPECIFICATION

(45) Date of publication of patent specification: **12.01.94**

(51) Int. Cl.5: **C08F 292/00**

(21) Application number: **89106738.1**

(22) Date of filing: **14.04.89**

(54) **Micro composite systems and processes for making same.**

(43) Date of publication of application:
**17.10.90 Bulletin 90/42**

(45) Publication of the grant of the patent:
**12.01.94 Bulletin 94/02**

(84) Designated Contracting States:
**AT BE CH DE ES FR GB IT LI NL SE**

(56) References cited:
**EP-A- 0 096 882**
**EP-A- 0 154 739**

(73) Proprietor: **UNION CARBIDE CORPORATION**
**39 Old Ridgebury Road**
**Danbury Connecticut 06817(US)**

(72) Inventor: **Hoy, Kenneth Look**
**839 McOueen Blvd.**
**Kanawha (25177) West Virginia(US)**
Inventor: **Glancy, Charles William**
**1013 Rustling Road**
**South Charleston (25303) West Virginia(US)**
Inventor: **Lewis, Jeffrey Michael Owen**
**1105 Skytop Circle**
**Charleston (25314) West Virginia(US)**

(74) Representative: **Weinhold, Peter, Dr. et al**
**Patentanwälte Dr. V. Schmied-Kowarzik**
**Dipl.-Ing. G. Dannenberg**
**Dr. P. Weinhold**
**Dr. D. Gudel**
**Dipl.-Ing. S. Schubert**
**Dr. P.**
**Barz**
**Siegfriedstrasse 8**
**D-80803 München (DE)**

EP 0 392 065 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to composite solids, especially particulate solids, dispersions of particulate solids in which the particles preferably have a mean diameter of generally 2µm (microns) or less, to stable water-based systems, i.e., paints, coatings, inks and the like, containing said dispersions, and also to methods used to prepare said composite solids, especially particulate solids, dispersions and water-based systems containing same.

A great amount of effort has been expended heretofore in attempting to encapsulate or coat materials with polymer. One field of endeavor has been to encapsulate finely divided materials such as metals, metal oxides, pigments, fillers, and inorganic and organic particulates in general having a mean particle diameter of generally 2µm (microns)or less. Many assertions have been made heretofore that the individual pigment particles have been coated with polymers, such as thermoplastic addition polymers, in order to prevent the particles from agglomerating and ultimately settling out of dispersions containing them. Additionally, attempts were made to encapsulate pigment particles for the purpose of improving paint properties including stability, gloss, hiding power, etc. The coated or alleged encapsulated particles, in many instances, were disclosed as useful in a wide variety of applications such as in the pigmented paint field as mentioned above or as electroconductive additives to plastics and other materials, toners for use in electrophotographic uses as well as many other applications.

Newman in US-A-3,133,893 discloses pigment particles coated with a polymer which is polymerized in situ by stabilizing pigment particles of less than 1.5µm (microns), mostly between 0.01 and 0.5µm (microns), in an aqueous medium in which an emulsion polymerization is carried out to form the polymer coating. The dispersion is formed with a suitable dispersant which may be cationic, anionic or nonionic. The patentee states at column 3, line 45: "In general, the type of dispersant is immaterial." Newman discloses stabilization of the pigment against agglomeration by means of the polymer coating on the individual pigment particles.

Osmond, et al., in US-A-3,544,500 disclose a complex process for encapsulating solid particles, e.g., pigments. The process involves first adsorbing a polymer on the surface of the particles and providing a stabilizer having an anchor group which becomes associated with the adsorbed polymer on the surface and a pendant hydrophilic component solvated by the aqueous phase and so provides a stabilizing sheath around the particles. The pretreated particles can then be subjected to aqueous emulsion polymerization of a monomer in an aqueous phase to effect the encapsulation. The polymer to be adsorbed on the surface is soluble in an aqueous medium containing the particles and a modification is effected to make the polymer insoluble. The patentees disclose at column 3, lines 67 et seq., that the polymer to be adsorbed should contain strong polar groups to promote adsorption on the surface of the particles. At column 2, lines 1, et seq., the patentees state:

"The particles may be dispersed in a solution of the polymer and stabilizer in the liquid but preferably they are dispersed in a solution of the polymer in the liquid, the stabilizer being added after dispersion of the particles. In the second stage of the preparatory treatment the nature of the solution is modified so that the adsorbed polymer is no longer soluble in the liquid continuous phase but the chain-like hydrophilic component of the stabilizing compound remains solvated by it. As a result of the modification of the solution the anchor component of the stabilizer becomes associated with the now insoluble polymer adsorbed on the disperse particles whilst the other chain-like component remains solvated by the liquid forming the continuous phase and provides a stabilizing sheath around the particles. The stabilizer may be added before the modification of the solution or at the same time as the modification takes place."

The patentees further state at column 3, lines 31, et seq., that:

"In general, because of the need to modify the solution containing the stabilizer, the stabilizer will be a non-ionic one providing a steric stabilizing sheath around the particles. Optionally such nonionic stabilizers may be supplemented by ionic types ... and these ionic types are preferably added after that [preparatory] stage."

Clarke, et al., in US-A-3,580,880 disclose allegedly stable dispersions and the preparation of same. Particulate solids are said to be dispersed in a liquid with a polymer comprising one chain-like lipophilic pendant component which is capable of being solvated in a lipophilic liquid and at least one nonionic chain-like component which is solvated by a hydrophilic liquid to effect what the patentees refer to as an entropic stabilization (Column 2, lines 15 to 33). The polymer may comprise as the hydrophilic component non-ionic chain-like components with a molecular weight of 350-5000 and the lipophilic component is sufficiently long to provide a barrier 12 Angstroms in thickness around the particles.

Schofield in US-A-4,349,389 describes dispersible inorganic pigment compositions in which the surface of the finely divided inorganic pigment particles is coated with a substance rendering the surface

hydrophobic ("hydrophobing agent"), said substance preferably being an amphiphile containing one or more hydrophobic chains of carbon atoms interrupted by O, N or S atoms, and one or more hydrophilic groups such as amino groups, quaternary ammonium groups, carboxylic groups, etc. wherein the hydrophilic group or groups anchors the hydrophobic chain to the pigment surface and a layer of a thermoplastic polymer evenly covers and adheres to the hydrophobic chain.

Solc in US-A-4,421,660 discloses aqueous dispersions of polymer coated particles, including titanium dioxide pigment particles, produced by first emulsifying polymerizable monomers with a chemical dispersant and/or surfactant and then polymerizing the monomer and coating the particles with the polymer resulting from the polymerization. The patentee discloses the use of high shear conditions, e.g., produced by an ultrasonic probe, to effect a colloidal dispersion of particles. Typically, the dispersion of solid particles is permitted to stand overnight after which the top layer of colloidal dispersed pigment is decanted and used in an emulsion polymerization. The encapsulated particles are particularly intended for applications requiring a colloidal size particulate having magnetic properties. The percent solids contents of the encapsulated particles set forth in the examples were too low without concentration for practical use in the manufacture of water-based paint.

Inspection of a photomicrograph (Sample No. 0) of allegedly encapsulated pigment presented by Solc during the prosecution of the patent application reveals titanium dioxide particles of about 0.2 to 0.3µm (micron) in diameter with a much greater number of polymer spheres of about 0.03 to 0.05µm (micron) in diameter. A portion of these polymer particles appears to be stuck to the perimeter of the titanium dioxide particles. The appearance of the coating suggests that Solc conducted an emulsion polymerization to produce very fine polymer particles and some of these polymer particles contacted and stuck to the surface of the titanium dioxide particles, i.e., no selective polymer growth appears to have occurred at the titanium dioxide surface. The use of sonication and very large amounts of surfactant which readily forms micelles are expected to promote the formation of very small emulsion polymerization particles of the type depicted by Solc

Farrar, et al., in US-A-4,507,422 describe aqueous dispersions of pigments containing as a dispersing agent a water soluble polymer having a polydispersity of below 1.5 (i.e., a narrow molecular weight range) and a molecular weight in the range of about 1000 to 5000. The preferred polymers are polymers of acrylic acid (or copolymers) with 2-acrylamido-2-methyl propane.

Martin in US-A-4,608,401 describes finely divided water insoluble particles free of ionic charges and states that the particles are given a generally uniform polymeric encapsulation. The patent states that such materials are obtained by mixing in an aqueous reaction medium a water insoluble monomer polymerizable to form a generally water insoluble polymer free of ionic charges in the presence of a nonionic surface active stabilizing agent, thereafter polymerizing the monomer using a redox polymerization initiating system which is free of ionic groups and does not decompose to release ionic groups in the reaction medium. The patent also states that naturally agglomerated particulate materials are effectively dispersed in situ during polymerization thereby eliminating the need for preliminary grinding and/or dispersion treatments. The patentee emphasizes that the medium be substantially free from anionic or cationic surface active or dispersing agent. The non-ionic stabilizing agent is said to have sufficient hydrophilic-lipophilic power to possess good emulsifying action and have an HLB of at least about 13. The patentee broadly discloses alkylphenyl and derivatives thereof as lipophilic components and ethylene oxide chains as hydrophilic groups, i.e., from about 10 to up to 200 or more $-(CH_2CH_2O)$-groups. Nonylphenol ethoxylates are the only agents used in the examples.

Solc in US-A-4,680,200 describes the encapsulation of organic pigment solids in a hydrophobic polymer made by dispersing the monomer in an aqueous colloidal dispersion of the organic particles followed by emulsion polymerization.

Gibson, et al., in US-A-4,413,073 disclose stable aqueous film-forming dispersions. The dispersions are said to be stable to harsh processing such as ball-milling and sand grinding which are sometimes necessary for the incorporation of certain pigments. See column 6, lines 8 to 18. The patentees do not disclose encapsulating particulate solids. Rather, the disclosure pertains to dispersions of particles of film-forming polymer such as alkyd resin in the presence of a stabilizing compound having an HLB value of at least 8 and whose lipophilic portion comprises at least one ethylenic double bond.

Daniel, et al., in EP-A-38730 disclose fine iron oxide ($Fe_3O_4$) particles (less than 0.01µm (microns)) emulsified in an anionic agent (e.g., $C_{12}H_{25}OSO_3Na$) and non-ionic surfactant, e.g., ethoxylated adduct of nonylphenol having 30 ethylene oxide units.

Kitahara, et al., in US-A-4,749,506 disclose a water-in-oil microgel dispersion in which a surface active agent is adsorbed or adhered onto a gel consisting of a fine particle substance and a polymer. The microgel is water-insoluble but is capable of being dispersed in both aqueous and oily solvents. The

disclosed surface active agents are ethoxylated adducts of phenol derivatives wherein the ethylene oxide chain is 1 to 20 units in length.

Hoy, et al., in US-A-4,426,485 disclose thickening agents comprising water-soluble, thermoplastic, organic polymer having segments of bunched monovalent hydrophobic groups. These thickening agents can find application to alter wetting characteristics of particulate materials and aid in suspending particulate materials in aqueous solutions.

Daubach, et al., in DE-A-2,745,872, disclose dispersing agents for dyes and fluorescent brighteners which agents have the structure

$$(ROCH_2)_2\ HCO\text{-}(CH_2CH_2O)_n\text{-}SO_3M_mH_{m-1}$$

where R is phenyl, $C_{1-18}$ alkylphenyl, di-$C_{1-8}$-alkylphenyl, tri-$C_{1-4}$-alkylphenyl, mono-, bis-, or tris (alpha-phenylethyl)phenyl, M is alkali metal cation or ammonium ion, n is 75 to 700 and m is 0 or 1.

Advantageously, processes for the polymeric encapsulation of finely-divided particles, e.g., pigments, are accomplished in a cost effective, efficient and environmentally-acceptable manner. Accordingly, aqueous media are the desired menstrua in which to conduct the polymerization process to encapsulate the particles. Polymerization from aqueous phases can result in the formation of precipitated polymer separate from the particles intended to be encapsulated. Thus, these new polymer particles represent a loss of efficiency in the encapsulation process. Hence, processes are sought which tend to minimize or reduce the creation or nucleation of new polymer particles. Moreover, the encapsulation process should be relatively non-complex in order to enhance its attractiveness for commercial operations. Unfortunately, the heretofore disclosed processes for encapsulation of particles in aqueous media frequently tended to have one or more shortcomings, e.g., complexity in that several pretreatment steps were required to provide particles suitable for encapsulation, and even then excessive creation or nucleation of new polymer particles occurred reducing the efficiency of the encapsulation.

The present invention relates to processes whereby a high molecular weight polymer is formed in the presence of an aqueous medium on solid surfaces. The processes are particularly attractive for encapsulating solid particles in dispersion in the aqueous medium. In accordance with the invention, the polymer effectively coats, or encapsulates, the particles without excessive creation or nucleation of new polymer particles. In effect, the process creates solid composites containing the original solid coated by the polymer.

In accordance with this invention, solid surfaces capable of adsorbing hydrophilic polymers are contacted with an aqueous medium containing a sufficient amount of polymeric amphiphile (amphiphilic polymer) having a hydrophilic backbone which is a hydrocarbyl-containing chain having a weight average molecular weight of at least about 3000 and having a hydrophilic moiety on average less than 2.5 carbon atoms apart, preferably said backbone has a hydrophilicity equivalent to at least about $-(CH_2CH_2O)_{70}H$, and said backbone having at least one lipophilic segment pendant therefrom such that the amphiphilic polymer exhibits an LHB value, hereinafter defined, of greater than about 1.5, preferably greater than about 2, to enhance compatibility of the surface of the solid with lipophobic components. The solid having contacted the amphiphilic polymer can be coated with hydrophobic polymer while the particles are in contact with an aqueous medium. The hydrophobic polymer is formed by polymerizing polymerizable components provided to the aqueous medium. In many instances, the inclusion of a minor amount of a non-ionic surfactant during the emulsion polymerization is desirable to enhance the quality of the polymeric coating. The surfactants generally have a hydrophilic component less hydrophilic (in terms of $-CH_2CH_2O-$ groups) than the hydrophilic backbone of the polymeric amphiphile.

One particularly attractive use of the processes of this invention is to encapsulate finely divided particles, i.e., of a size capable of being dispersed in an aqueous medium, and, preferably, the coating or encapsulation is effected with the particles being dispersed in the aqueous medium. With small particles, i.e., below about 2$\mu$m (microns), the amphiphilic polymer used in the processes of this invention may also serve to enhance the stability of the dispersion of both the uncoated and coated particles. An aspect of this invention pertains to coating compositions comprising solid particles having been coated in accordance with a process of this invention, which particles are dispersed in a liquid which does not unduly swell the polymeric coating.

A further aspect of this invention pertains to solid composites having a coating comprising hydrophobic polymer having dispersed therewith polymeric amphiphile.

In yet a further aspect of this invention, the polymeric amphiphile has a backbone with a hydrophilicity equivalent to at least about $-(CH_2CH_2O)_{70}$ units. Preferably, the polymeric amphiphile is comprised of $-(CH_2CH_2O)$-units.

In a still further aspect of the invention, the polymeric amphiphile is a polymeric associative thickener comprising a polymer having a weight average molecular weight of at least about 10,000 and, in the average molecule, a hydrophilic backbone and an average of more than one pendent hydrophobic group connected to said hydrophilic backbone and, generally, a non-ionic surfactant is present when polymerizing to form the hydrophobic polymer coating on the surface of the particle.

Another aspect of the present invention concerns stable aqueous dispersions suitable for manufacture of highly stable, water-based systems which are capable of providing dried films having high hiding power and gloss. The high hiding power enables the paint manufacturer to substantially reduce levels of the more expensive hiding pigments thereby reducing costs of each gallon of paint produced.

Figure 1 is a transmission electron photomicrograph of a titanium dioxide pigment encapsulated with hydrophobic polymer in accordance with this invention.

Figure 2 is a transmission electron photomicrograph of Sample No. 0 as contained in the file in the United States Patent and Trademark Office of US-A-4,421,660 to Solc.

## Detailed Description

### a. Overview

The exact means by which the hydrophobic polymer forms the coating on a substrate surface in contact with an aqueous media in the processes of this invention is not completely understood. Two of the possible ways by which the coating can occur are: (1) Polymerization could occur by an epitaxial polymerization of the polymerizable component, e.g., monomer, absorbed in the hydrophobic zone defined, at least in part, by the amphiphilic polymer which itself is adsorbed on the "surface" of the substrate; or (2) In the case of partially water soluble monomers, e.g., vinyl acetate (wherein water solubility is further enhanced by the 50 °C or higher polymerizing temperatures used and also by the use of propylene glycol), polymerization may begin in the aqueous phase and the growing polymer chain, as it reaches the size where it is no longer even partially soluble in water, adsorbs on the surface of the dispersed solid particulate phase without the nucleation of new polymer particles.

In the present invention it is believed that the highly polar water soluble backbone or segments of the amphiphilic polymer adsorbs on the surface of polar solid surfaces of the substrate. It is well known that hydrophilic polymers such as polyethylene oxide, hydroxyethyl cellulose, etc. are adsorbed on the surfaces of clays, metal oxides and the like; however the amphiphilic polymer also contains non-polar moieties, often attached in a pendant manner to the water-soluble polymeric backbone, which must be oriented by geometrical constraints away from the substrate surface. The net effect of the amphiphilic polymer then is to create a dynamic hydrophobic zone which is energetically unstable in the aqueous environment and subsequently associates (by hydrophobic bonding) with hydrophobic moieties of other amphiphilic polymer molecules and/or surfactant to form a stabilizing bilayer, or hydrophobic zone. When the substrate is in particulate form, the dispersed particles can be quite stable in the aqueous environment and the hydrophobic zone, which is sandwiched between two water soluble layers.

The hydrophobic zone, which is sandwiched between two water-soluble layers, provides a region where hydrophobic monomers can accumulate and subsequently be polymerized. Wu, et al., in "Characterization by Ellipsometry of Polymerized Ultra-Thin Films Formed in a Two-Dimensional Solvent on an Oxide Surface", Colloids and Surfaces, 26, pp. 155-169 (1987) and Parfitt, et al., editors, Adsorption from Solution at the Solid/Liquid Interface, Academic Press (1983) p. 141, provide support to the belief that a hydrophobic layer formed by surfactant can exist at the interface of a solid surface and an aqueous medium. While we believe that the bilayer theory described herein makes the invention understandable, we do not limit in any way the scope of the present invention by the suggested mechanisms.

### b. The Solids

The solids employed in the present invention have a surface capable of adsorbing hydrophilic polymers, i.e., have a hydrophilic surface, even though the particles may be essentially water insoluble. A surface is hydrophilic when a polyethylene glycol of a molecular weight of about 400 is more strongly adsorbed than benzene. Preferably, the surface is more hydrophilic than silica. Solids having hydrophilic surfaces include those comprised of metal oxides, metal salts such as phosphates, sulfates, and the like and organics having carbonyl, carboxylic, amine, phosphate, urethane, sulfate, sulfonate, phosphonate and the like groups, on at least the surface of the particles. As is well known, metals such as aluminum, iron, titanium, silver and gold oxidize in air and, hence, the surfaces of such materials are hydrophilic in nature.

The solid to be coated in accordance with this invention may be composites, e.g., may have coating or layer of a material providing a hydrophilic surface. If a naturally hydrophilic surface has been treated to reduce its hydrophilicity, it may be desirable to treat the surface, e.g., by cleansing, heat treatment, acid treatment, etc., to remove the deleterious agent.

Exemplary of solids are water insoluble solids such as inorganic solids including inorganic pigments such as titanium dioxide, zinc oxide, antimony oxide, magnesium oxide, fly ash, red oxide, glass particles, yellow oxide, lemon chrome and cobalt blue; powders of metals including titanium, copper, brass, gold and stainless steel; carbonates such as calcium and magnesium carbonates; phosphates such as calcium and lead phosphates; silica and silicates such as clay, calcined clay, mica and glass particles; chromates such as lead chromate; metal salts such as silver chloride; inert filler materials such as titanates and talc; ferrites; aluminum hydrates; and the like. Of particular interest are flakes, plate-like structures, fibers and powders of metals and metal alloys such as aluminum, cobalt, iron, copper, nickel, chromium, zinc, palladium, silver, ruthenium, platinum, gold, rhodium, lead and alloys of these metals. Also of interest are the oxides of such metals, particularly magnetic oxides such as iron, nickel, cobalt or alloys thereof, as well as metal oxides, e.g., alumina or silica, or oxides of other elements, such as titanium dioxide and barium oxide, and other inorganic materials such as sulfates such as barium sulfate; dielectric materials such as perovskites, barium titanates, etc.; and electrical conductors including super conductors. The surface of the solid may be of a different composition than the underlying structure. The solid substrate surface may thus be selected to provide the hydrophilic properties, i.e., as composites. Composite solids include, e.g., aluminum having an aluminum oxide surface thereon and conventional titanium dioxide pigments having alumina, silica or alumina and silica coatings thereon.

Other solids that can be employed in this invention are organic pigments such as the essentially water-insoluble organic pigments including the rhodamines, the phthalocycanines and laked pigments, e.g., the azo lakes, as well as those pigments disclosed in US-A-4,194,920. Other examples of such organic solids are organic fillers, catalysts and the essentially water-insoluble organic fire retardant additives such as decabromodiphenyloxide.

The solids to be coated or encapsulated may be in any desired configuration, e.g., sheets, fibers, particles, flakes, blocks, etc. When in the form of particulate solids, they conveniently are of a size capable of being dispersed in an aqueous medium. Frequently, the particulate solids have an average particle size of less than about 2μm (microns). For pigments, the particle size is most often below about 1μm (micron). Advantageously, with pigments that perform by light scattering, particle sizes of between about 0.1 to 0.7μm (micron) are employed. While this invention can provide coated particulate solids for paints, molding resins, and other colorant utilities, the coated particles can find application in electronic, medical and other applications. Hence, the size of the particulate solids will vary depending upon the intended application of the coated particle, and the size may vary from, say, 50 or 100 Angstroms to 50 or 100 or more μm (microns).

c. The Amphiphilic Polymer

In the processes of this invention, the surface to be coated, or encapsulated, by hydrophobic polymer, are contacted with amphiphilic polymer. The amount of amphiphilic polymer is at least sufficient to enhance "Encapsulation Efficiency". "Encapsulation Efficiency" is the weight percent of the hydrophobic polymer that coats the particulate solids. The following formula can be used to calculate Encapsulation Efficiency:

$$\text{Encapsulation Efficiency} = \frac{\text{Polymer Observed as Coating}}{\text{Theoretical Polymer for Coating}}$$

Hence, polymer that nucleates to form polymer-only particles reduces the Encapsulation Efficiency. In the preferred aspects of this invention, Encapsulation Efficiencies of at least 85 percent, preferably, at least 90 percent, are achieved.

In general, it is preferred to use the amphiphilic polymer in amounts which in the system are below those which form an undue amount of stable micelles. Stable micelles provide sites at which monomer can polymerize and thus reduce the Encapsulation Efficiency. The concentration of amphiphilic polymer at which stable micelles are formed will depend upon the system, and concentrations greater than the critical micelle concentration may be used without the undue formation of stable micelles. Many amphiphilic

polymers do not readily form stable micelles even though they may be present in amounts greater than the critical micelle concentration. The critical micelle concentrations are usually determined under conditions which favor the formation of micelles. These conditions are not generally present in coating and polymerization systems which involve agitation and short residence times. Surfactants such as cationic and anionic surf actants tend to more readily form stable micelles than do nonionic surfactants, and with respect to nonionic surfactants, the longer the hydrophilic chain the more difficult to form micelles and the less pronounced is the critical micelle concentration. Moreover, the presence of other components in the system, e.g., the substrate surface to be coated or encapsulated and surfactant, if any, can affect the concentration of amphiphilic polymer needed to form micelles and the rate of formation and stability of the micelles. For instance, any amphiphilic polymer adsorbed on the substrate surface would not be available for undesirable micelle formation. Usually, the concentration of amphiphilic polymer approximates the theoretical critical micelle concentration, i.e., is at least about 70 mole percent, say, 75 to 110 or 200, mole percent of the critical micelle concentration as determined in distilled water. In any event, at least sufficient amphiphilic polymer is used, in combination with any surfactant present, to provide on a theoretical basis a bilayer defining a hydrophobic zone, over at least a portion, e.g., at least 25, preferably at least 50, percent of the surface area to be coated. The amount of amphiphilic polymer used for the best coating results will, nevertheless, be dependent upon other components in the coating system including the presence of any surfactant, as mentioned above, as well as the nature of the surface to be coated. When particles are to be encapsulated and dispersed in an aqueous medium, the relative amount of amphiphilic polymer should be sufficient to provide enhanced stability to the dispersion yet maintain the aqueous medium at a viscosity within suitable ranges. If too much amphiphilic polymer is used, the viscosity of the dispersion may be undesirably high. Often, the amphiphilic polymer is provided in an amount of at least about 0.01 weight percent based on the weight of particulate solids, e.g., from about 0.01 to 5, say, about 0.5 to 2, weight percent based on the weight of particulate solids. The concentration of the amphiphilic polymer provided to the aqueous medium is sometimes between about 0.1 to 50 grams per liter, say, about 0.5 to 20 grams per liter.

The amphiphilic polymers useful in the present invention are characterized as having a hydrocarbyl-containing hydrophilic backbone having a hydrophilic moiety on average less than about 2.5, often between about 1 and 2.5, carbon atoms apart, preferably having a hydrophilicity equivalent to at least about $-(CH_2CH_2O)_{70}H$, and at least one lipophilic segment pendant from the backbone such that the amphiphilic polymer exhibits an LHB value of at least about 1.5, preferably at least about 2. Often, the LHB value is about 1.5 to 15, for instance, about 2 to 12.

The LHB value for an amphiphilic polymer is determined by dividing the weight average molecular weight of the lipophilic segment(s) on the backbone by the weight average molecular weight of the amphiphilic polymer times 20. For instance, a nonylphenol ethoxylate having about 70 $-(CH_2CH_2O)-$ units would have an LHB value of about 1.2. If two nonylphenol groups were present, the ethoxylate would have an LHB value of about 2.2.

Hydrophilic moieties include ether oxygen atoms, double-bonded oxygen, hydroxyl groups, carboxylate groups, thio groups, amido groups, amino groups, imido groups, sulfonyl groups, phosphonyl groups, carbamate groups, carbonate groups, phosphate groups, sulfate groups and the like. Hence, these groups can be integral within the backbone such as in a poly(oxyethylene) chain or an ether in a cellulosic structure, or they can be pendant from the hydrocarbyl-containing backbone such as hydroxyl groups and carboxylate groups. The molecular weight of the hydrophilic backbone is preferably at least about 2500, say, at least about 3000 to 2 million or more. The backbone preferably contains in direct chain relationship (as opposed to being in pendant groups) at least about 100 carbon atoms, e.g., at least about 140, say, 150 to 150,000 carbon atoms (on a weight average basis). In general, with the longer backbones for a given type of amphiphilic polymer, the more strongly the coating is bonded to the surface. The amphiphilic polymer can be selected on the basis of its interaction with the surface to be coated. Some amphiphilic polymers seem better suited for certain surfaces while other amphiphilic polymers may be less desirable, but yet, for other surfaces, the rankings of the amphiphilic polymers may be changed. Often, with less hydrophilic surfaces, amphiphilic polymers having longer backbones and stronger polar (hydrophilic) moieties are preferred.

The hydrophilic backbone of the amphiphilic polymer may contain lipophilic groups or segments. The lipophilic segments are termed as being "pendant" but may include terminal groups as well. The lipophilic moieties may comprise aliphatic and/or aromatic hydrocarbyl groups, e.g., alkyl, alkenyl, aryl, alkynyl, aralkyl, alkaryl groups which may each have from 1 to about 40 carbons, preferably, from about 6 to 35 carbons. Preferably, the hydrocarbyl groups are of a sufficiently low molecular weight and/or low linearity that the amphiphilic polymer is essentially non-crystalline (amorphous). Advantageously, the Krafft point of

the amphiphilic polymer as determined at a 20 weight percent solution in distilled water is below about 70°C, preferably below about 50°C and even more preferably below about 25°C. Hence, cyclic (especially aromatic) and branched hydrocarbyl lipophilic segments are preferred over linear hydrocarbyl segments. Most frequently, more than one lipophilic segment will be pendant from the hydrophilic backbone.

One preferred type of amphiphilic polymer contains at least about 50, preferably at least about 70, say about 70 to 10,000 or 20,000, $-(CH_2CH_2O)-$ units ("EO Units"). Advantageously, at least about 50, preferably at least about 70, EO units are provided which are unbroken by a lipophilic group within the backbone, although a lipophilic group may depend from the backbone (however, one or more hydrophilic groups may break the EO chain). While not wishing to be restricted to theory, it is believed that the long, uninterrupted hydrophilic chain enhances the attraction between the amphiphilic polymer and the substrate surface. It is even conceivable that the EO chain may loop away from the substrate surface to provide pockets of hydrophilicity within the hydrophobic zone defined by the lipophilic segments. With sufficiently long EO chains, the hydrophilic backbone may attach at several points to the substrate surface.

One type of amphiphilic polymer is known as polymeric associative thickeners. Polymeric associative thickeners useful in the present invention general have a molecular weight (weight average) of at least 10,000, suitably of 10,000 to 2 million, preferably 75,000 to 750,000. In addition, the polymer comprises, in a single molecule, a polymeric backbone containing more than one hydrophobic segment and at least one hydrophilic segment. In one embodiment, the hydrophobic segment contains in the average molecule more than one pendant hydrophobic group, e.g., a nonylphenoxymethyl group, bonded to the polymeric backbone. The hydrophilic segment contains a plurality of hydrophilic groups, e.g., polyoxyethylene groups, comprising at least a portion of the backbone. Suitable polymeric associative thickeners are set forth in the Examples and additional polymeric associative thickeners are described in US-A-4,426,485; 4,496,708; 3,779,970; 4,304,902; 4,228,227; 4,209,605, EP-A-0013836, and EP-A-0011806.

The polymeric associative thickeners having two or more hydrophobic segments are termed as comprising "bunched hydrophobic groups" when the hydrophobic segments are in close association, or proximity, with each other, e.g., within about 50, most preferably within about 25, covalently bonded, sequentially connected atoms. Polymeric associative thickeners having bunched hydrophobes are disclosed in US-A-4,426,485.

A class of polymeric associative thickeners useful in the present invention have the formula

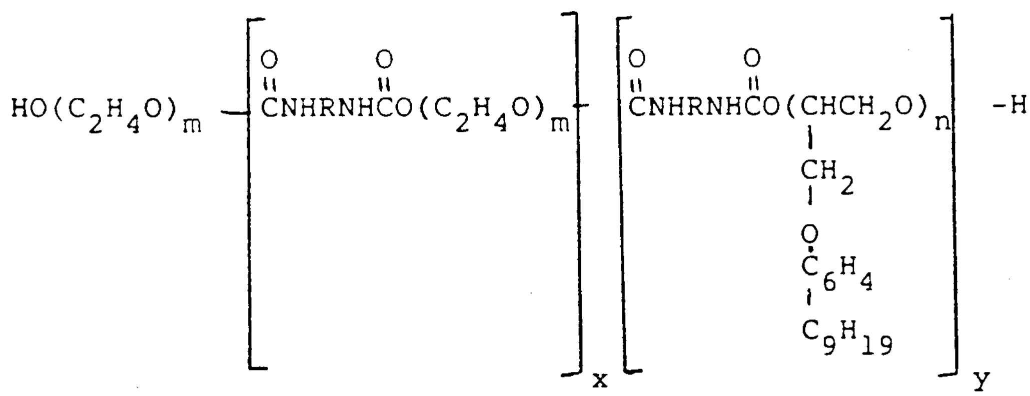

wherein R is a divalent organic group such as alkylene, arylene, alkenylene, alkarylene, aralkylene, cycloalkylene and cycloalkenylene, m is a number having an average value of about 90 to about 320, preferably about 180 to about 230, n is a number having an average value at least about 1 and preferably 1 up to about 30, x is a number having an average value of greater than about 1, preferably about 5 to about 25, and y is a number having an average value of greater than about 1 and preferably from more than about 1 to about 10. The R groups have preferably up to 20 carbon atoms. Associative thickeners of this type are conveniently used as a solution in butyl carbitol, e.g., about 16 wt. % with water preferably being about 64 wt. %. Polymeric associative thickeners of this type are disclosed in US-A-4,426,485.

Associative thickeners also include hydrophobized polysaccharides, e.g., hydrophobized starches, celluloses and gums such as xantham gums and gum arabic. Hydrophobizing groups represent the pendant lipophilic moieties as discussed above.

Frequently, the amphiphilic polymer is relatively free from ionic groups, e.g., often less than 2 or 3 ionic groups are provided on average per molecule, and in most instances the amphiphilic polymer is nonionic.

When ionic moieties are present, they should be in an amount which, at the concentrations of amphiphilic polymer desired to provide, e.g., enhanced bonding and particle dispersion, does not result in an undue reduction in Encapsulation Efficiency. The amphiphilic polymer may contain reactive groups such as those that may copolymerize with the hydrophobic polymer.

d. Nonionic Surfactant

In many instances, enhanced Encapsulation Efficiency is obtained when nonionic surfactant is included in the aqueous polymerization medium. The desirability for nonionic surfactant appears to be related to the number and location of the lipophilic segments in the amphiphilic polymer. In general, the more widely dispersed the lipophilic segments in the amphiphilic polymer, the more desirable to use a nonionic surfactant. The desirability of using a nonionic surfactant will also be related to the polymerization system employed. With many amphiphilic polymers in a vinyl latex polymerization system, nonionic solvent may not be essential; however, with acrylic polymerization systems, the nonionic surfactant can be quite beneficial. The nonionic surfactant has a hydrophilic component less hydrophilic than the hydrophilic backbone of the amphiphilic polymer. The HLB value of the nonionic surfactant may vary widely, e.g., from about 5 to 19.5 or more, e.g., about 10 to 19. It should be noted that when combinations of amphiphilic polymers are used with one of the amphiphilic polymers having a hydrophilic backbone, e.g., an EO chain, not interrupted nor having both ends terminated with hydrophobic group, desirable Encapsulation Efficiencies may be obtained in some systems even in the absence of nonionic or other surfactants.

While not wishing to be limited to theory, it is believed that the hydrophobe of the nonionic surfactant is attracted to the lipophilic segments of the amphiphilic polymer and assist in defining a hydrophobic zone in which the hydrophobic polymer coating is formed. The amphiphilic polymer is believed to be more strongly attracted to the substrate surface than the nonionic surfactant. This phenomenon, together with the attraction of the surfactant to the surface, may permit the use of greater amounts of nonionic surfactant than would be expected to result in undue micelle formation.

The amount of nonionic surfactant, when used, is preferably present in an amount sufficient to enhance the Encapsulation Efficiency. While the nonionic surfactant can contribute to obtaining a stable dispersion of coated particles, often the primary factor in the stabilization is the amphiphilic polymer. If desired, the nonionic surfactant can be used in an amount sufficient to provide a reasonably stable aqueous dispersion of the hydrophobic polymer-coated particulate solids. When used, the nonionic surfactant is typically present in an amount of about 1 weight percent to about 30 weight percent, preferably about 5 weight percent to about 20 weight percent, based on the weight of the particulate solids. If unduly large amounts of nonionic surfactant are used, risks exist that micelles will form in the aqueous phase and provide nucleation sites for the generation of polymer particles and thus reduce Encapsulation Efficiency. In many instances, due to the systems used, the concentration of nonionic surfactant, when used, is greater than the critical micelle concentration as determined in distilled water for the surfactant. Indeed, amounts of nonionic surfactant ten times greater than that required to achieve a critical micelle concentration in distilled water have been used without undue micelle formation and with high Encapsulation Efficiencies. Frequently, the nonionic surfactant is provided in a weight ratio of surfactant to amphiphilic polymer of 0 to about 100:1, say, about 1:1 to 50.1, more preferably, about 10:1 to 40:1.

Nonionic surfactants suitable for use in this invention contain a hydrophilic group such as a polyoxyethylene chains and a hydrophobic group such as the nonylphenyl group. Also included as suitable nonionic surfactants are the polycondensates of propylene oxide and ethylene oxide with various hydrophobic groups. Examples are octyl or nonyl phenol polyethoxylates containing 10 to 150 EO groups, polyethoxylated esters of fatty acids, polyethoxylated esters of fatty alcohols, ethylene oxide/propylene oxide block copolymers, fatty amine ethoxylates, alkyl-phenol formaldehyde novolac resin alkoxylates and the like, and the nonionic surfactants such as described in US-A-4,608,401, columns 11-13; and US-A-4,209,333.

e. The Hydrophobic polymer

The hydrophobic polymer provides the coating on the solid surface and is produced by polymerization of polymerizable components while the surface is in an aqueous medium. The polymerizable components may be prepolymers or monomers. For the sake of convenience, both prepolymers and monomers will be referred to herein as "monomers" since they take part in further polymerization or cross-linking. The amount of monomer used is not narrowly critical and can range for coating solid particles from about 1 wt. part monomer per about 9 wt. parts of particulate solids to about 9 wt. parts monomer per about 1 wt. part

of particulate solids. The amount used will depend upon the thickness of the desired coating, the Encapsulation Efficiency, and the percentage of the monomer polymerized. Since the monomer may be added initially or both initially and during the polymerization, the concentration of monomer with respect to the aqueous medium can vary widely, e.g., about 0.1 weight percent to 100 or more weight percent based on the amount of aqueous solution present.

The monomers employed in the present invention to produce the hydrophobic polymer coating on the substrate surface include essentially water immiscible monomers as well as those that are miscible in water. The selection of the monomer and polymerization system is made in concert with the other components of the system. Conditions such as pH and temperature for a given polymerization system need to be taken into account when selecting the amphiphilic polymer and nonionic surfactant, if any. For instance, temperature and pH can affect surfactant performance, hydrophilicity of the amphiphilic polymer and critical micelle concentrations.

Examples of monomers include monovinylidene aromatic monomers such as styrene, vinyl toluene, t-butyl styrene, chlorostyrene, vinylbenzyl chloride and vinyl pyridine; alkyl esters of alpha, beta-ethylenically unsaturated acids such as ethyl acrylate, methyl methacrylate, t-butyl acrylate, n-butyl acrylate and 2-ethylhexyl acrylate; unsaturated esters of saturated carboxylic acids such as vinyl acetate; unsaturated halides such as vinyl chloride and vinylidene chloride; unsaturated nitriles such as acrylonitrile; dienes such as butadiene and isoprene; and the like. Of these monomers, the unsaturated esters such as vinyl acetate, the alkyl acrylates and methacrylates, such as butyl acrylate and methyl methacrylate, are preferred. In addition to the aforementioned hydrophobic monomer, relatively minor portions, e.g., less than 10, preferably less than 5 weight percent based on total monomer component, of water-soluble monomer such as an ethylenically unsaturated carboxylic acid or its salt such as acrylic acid or sodium acrylate; methacrylic acid; itaconic acid and maleic acid; an ethylenically unsaturated carboxamide such as acrylamide; vinyl pyrrolidone; hydroxyalkyl acrylates and methacrylates such as hydroxyethyl acrylate, hydroxypropyl acrylate and hydroxyethyl methacrylate aminoalkyl esters of unsaturated acids such as 2-aminoethyl methacrylate; epoxy functional monomers such as glycidyl methacrylate; sulfoalkyl esters of unsaturated acids such as 2-sulfoethyl methacrylate; ethylenically unsaturated quaternary ammonium compounds such as vinylbenzyl trimethyl ammonium chloride may be employed. However, the water-soluble monomers may not be employed in amounts sufficient to render the resulting polymer soluble in water. Particularly effective monomer recipes for the practice of this invention are those containing from about 20 to about 90 weight percent of vinyl acetate and from about 10 to about 80 weight percent of alkyl acrylate such as n-butyl acrylate or t-butyl acrylate with said weight percentages being based on the weight of total monomers.

The polymer coating may comprise the same polymer throughout its thickness or the polymer may vary. For instance, monomers to provide a hydrophobic polymer which readily coats the substrate surface may first be used with a different monomer or comonomer blend being used for at least a portion of the remainder of the coating thickness. This portion of the coating may have different properties than that initially applied. For example, this portion of the coating may be tougher and/or more rigid and may less readily coat the substrate surface than the first portion of the coating. Also, in this manner a portion of the coating can be swellable or otherwise be treated so that the coating can be deformed. When the swelling is reduced, pockets may be formed within the coating. These pockets may be helpful in, say, increasing the hiding power of a paint.

f. The Process

The substrate surface can be contacted with the aqueous medium in any suitable manner. The aqueous medium preferably contains at least about 50, more preferably, at least about 90, volume percent water. Other solvent or liquid can be present, e.g., ethylene glycol, ethanol, propanol and propylene glycol, as well as other typical additives for emulsion polymerization such as defoamers, plasticizers, etc. Most frequently, when such other components are present, the aqueous medium is in a single liquid phase and the other components do not dissolve or swell the hydrophobic polymer.

To facilitate avoiding agglomerizations when processing particulate solids, dispersions can be provided by means producing high shear mixing. Examples include Cowles dispersing equipment, a Waring blender, a homogenizer, or an ultrasonic mixer. The proportion of aqueous medium and particulate solids used to make the initial dispersion is not critical. Frequently, this proportion ranges from about 50 to about 80 weight percent of the particulate solids based on the combined weight of the aqueous medium and particulate solids. This is within the range for usual grinding procedures for producing, for instance, a pigment paste which can then be let down, i.e., diluted with additional aqueous solution, e.g., to about 30 to

about 75% of the particulate solids based on the combined weight of aqueous medium and particulate solids. The conditions of grinding or dispersing the particles in the water are not narrowly critical and can be varied over a wide range. Normally, the mixture is neither heated nor cooled other than by interaction with the ambient environment and the temperature is determined by the heat produced during grinding, e.g., temperatures are often between about 30° and 50° C. although higher or lower temperatures can be used. Other grinding aids can also be employed such as propylene glycol in amounts of up to about 50% by weight of the highly divided solid particles.

In practicing this invention, sometimes a water soluble anionic dispersant is used. While anionic dispersants most commonly find use in providing dispersions of particulate solids for encapsulation, they are seldom preferred due to the tendency to form micelles or otherwise reduce Encapsulation Efficiencies. If an anionic dispersant is used, it often is present in an amount of about 0.001 to about 5, e.g., about 0.01 to about 1, weight percent based on the aqueous solution. For particulate solids, the amount of anionic dispersant is sometimes in an amount of about 0.1 to about 10, preferably about 0.5 to about 2%, by weight of the particulate solids.

Anionic dispersants include salts of fatty acids such as potassium oleate, metal alkyl sulfates, such as sodium lauryl sulfate, salts of alkylaryl sulfonic acids such as sodium dodecylbenzene sulfonate, polysoaps such as sodium polyacrylate copolymers of alkali metal poly(meth)acrylates with various comonomers, and alkali metal salts of methyl methacrylate/2-sulfoethyl methacrylate copolymers and other sulfoalkyl acrylate copolymers, and other anionic surfactants such as the dihexyl ester of sodium sulfosuccinic acid; alkyl-sulfoxide and alkyl-sulfone terminated oligomers as described in US-A-3,776,874 and 3,668,230; alkyl-sulfoxide terminated oligomers as described in US-A-3,772,382; alkyl-sulfide terminated oligomers as described in US-A-3,632,466; 3,498,942; 3,498,943 and 3,839,405. The potassium or ammonium salts of functionalized oligomers, e.g., Polywet (TM) varieties sold by Uniroyal Chemical, can be used as the anionic dispersant. When using anionic surfactants, ammonium salts are usually preferred to minimize the tendency toward micelle formation and thus maintain acceptable Encapsulation Efficiencies. Such surface active agents or emulsifiers are employed in amounts sufficient to enhance the ability to achieve a stable dispersion of the particulate solids in the aqueous medium. Anionic surfactants or dispersants can generally be used after encapsulation or coating without adverse effect on the Encapsulation Efficiency. This may be useful with encapsulated particles which are desired to be provided in stable dispersion.

The amphiphilic polymer may be added to the aqueous medium in any convenient manner and, preferably, at a time prior to the initiation of the polymerization. Frequently, when coating particulate solids, the amphiphilic polymer is added after the particulate solids are provided in the aqueous medium. The formation of the hydrophobic polymer coating may occur during or after the dispersion of the particulate solids in the aqueous medium. Separate vessels may be employed for the dispersing and the polymerization, or the entire process may occur in one vessel.

Contacting the particulate solids in the aqueous medium with the amphiphilic polymer and the polymerization step can be carried out sequentially. High shear mixing can be carried out during the polymerizing step or no, low or non-shear mixing can be used during the polymerizing step. Optionally, both the contacting with amphiphilic polymer and polymerizing can be carried out concurrently in the same reaction vessel or the contacting with amphiphilic polymer can be carried out in one vessel and the polymerizing step can be carried out in another. The concurrent carrying out of contacting with amphiphilic polymer and polymerization are preferred from more than one standpoint. Initially, there is some time, labor and machinery costs saved since obviously no transfer of the dispersed material is required and only one reaction vessel is needed instead of a contacting vessel and a separate reaction vessel.

With smaller particle sizes and for applications such as pigments in paint, the dispersion of the particulate solids is preferably reasonably stable, i.e., the dispersion does not immediately settle upon ceasing the mixing. Often, for these applications, appreciable settling of the particulate solids does not occur for a period of at least about 1, say, at least about 6, hours, and preferably, the dispersion is stable for about 10 to 1000 or more hours.

The polymerization conditions employed in the practice of this invention can vary widely depending upon the monomer and catalysts, if any, used. Conveniently, free radical-type or redox-type polymerization systems are used. In general, free radical-type polymerization is carried out in the presence of a free radical initiator such as a peroxygen compound, an azo catalyst, ultraviolet light or any other free radical initiator. Examples of suitable peroxygen compounds which can be employed as catalyst include inorganic persulfate compounds such as sodium persulfate, potassium persulfate and ammonium persulfate; peroxides such as hydrogen peroxide, t-butylhydroperoxide, dibenzoyl peroxide and dilauroyl peroxide; azo catalysts such as azobisisobutyronitrile, and other common free radical generating compounds. Also suitable are various forms of free radical generating radiation means such as ultraviolet radiation, electron

beam radiation and gamma radiation. Preferably, free radical-type polymerization is carried out in the presence of a water-soluble peroxygen compound at temperatures in the range from about 40° to about 100°C.

Alternatively, a redox catalyst composition can be employed wherein the polymerization temperature usually ranges from 25° to about 80°C. Exemplary redox catalyst compositions include a peroxygen compound as described hereinbefore, preferably potassium persulfate or t-butyl hydroperoxide and a reducing component such as sodium metabisulfite or sodium formaldehyde sulfoxylate. It is also suitable to employ various chain transfer agents such as mercaptans, e.g., dodecyl mercaptan; dialkyl xanthogen disulfides; diaryl disulfides and others listed by Blackley in Emulsion polymerization, Chapter 8 in concentrations as described therein.

The catalyst concentration will be a factor in influencing the average molecular weight and molecular weight distribution of the hydrophobic polymer coating. With too much catalyst, the average molecular weight is low which leads to a weaker and less scrub resistant coating.

The catalyst concentration for both free radical-type and redox-type polymerization is normally in the range from about 0.005 to about 8, preferably from about 0.01 to about 5, and many times from about 0.1 to 0.5, weight percent based on the weight of total monomer.

High shear mixing during the polymerization may not only help in preventing agglomerization and/or settling of the particulate solids but also, it may help improve transfer of monomer to the hydrophobic zone at the surface of the particulate solid. This can enhance Encapsulation Efficiency. Unlike conventional encapsulation or coating processes such as disclosed by Solc in US-A-4,421,660, in the processes of this invention the monomer is preferably not emulsified and dispersed using a dispersing agent in the aqueous medium. Without wishing to be limited to theory, it is believed that monomer-rich phases exist in the aqueous medium and that the monomer, with some degree of solubility in the aqueous phase (which may be very limited), is in equilibrium between the monomer phase and the aqueous phase. A similar equilibrium exists between the aqueous phase and the hydrophobic zone at the surface of the particulate solids where the hydrophobic polymer is sought. Thus, the high shear mixing can enhance transfer of monomer to the surface of the particulate solid and may tend to reduce the presence of conditions that enable the nucleation of polymer particles in the aqueous phase. Surfactant present in the aqueous medium may also assist in the transfer of monomer.

The thickness of the coating may be selected over a wide range, e.g., from about 0.01 to 10, often, about 0.03 to 0.5 or 1µm (micron). Generally, the coatings are relatively uniform at the surface of the particulate solids. Figure 2 shows the uniformity of a coating prepared by a process of this invention. In addition, the hiding power for the concurrent grinding-polymerizing procedure results in extremely high hiding powers for titanium dioxide in conventional paint formulations, i.e., as high as $54.9m^2$ ($180ft^2$) or more per 454g (pound) of titanium dioxide.

In advantageous aspects of this invention, the particulate solid is finely divided, e.g., less than 2µm (microns) in average particle size and is desired to be in a relatively stable dispersion in a liquid medium after coating with the hydrophobic polymer. The amphiphilic polymer alone or in combination with nonionic surfactant used to define the hydrophobic zone can assist in providing the relatively stable dispersion and can tend to minimize the formation of agglomerates of the coated particulate solids, and those agglomerates which form may be more readily broken apart.

The coated surface can be removed from the aqueous medium or, especially in the case of pigments for latex paints, remain dispersed in the aqueous medium. The encapsulated particulate solids of this invention can have advantageous properties for recovery of the particulate solids in dry form without undue agglomeration. The particulate solids are capable of being redispersed in aqueous or other liquid medium without undue grinding. Moreover, the coated particulate solids may find use in molding compositions and the like. The other surfaces coated can find application where such materials are suitable for use, e.g., structural members, fillers, etc.

## EXAMPLES

The following examples are presented wherein all parts and percentages are on a weight basis, all temperatures are on the Centigrade scale, and the following designations are defined as follows.

A.T. I: a solution of 20 wt. % of a polymeric associative thickener having the formula:

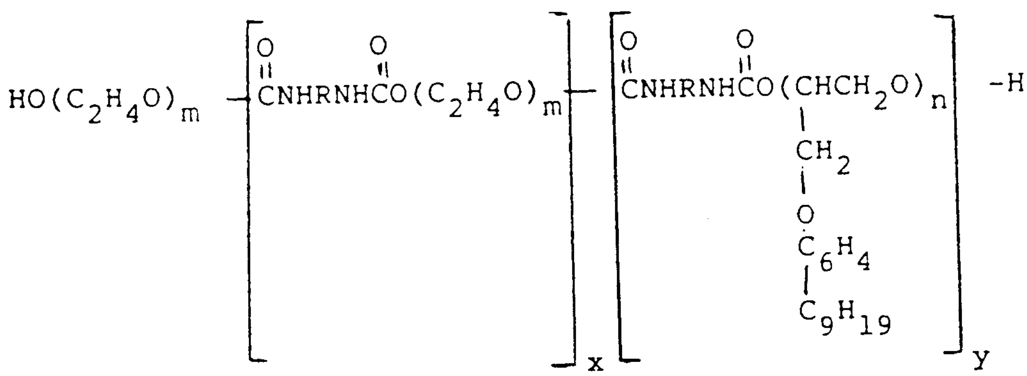

wherein R is a divalent organic group having the formula

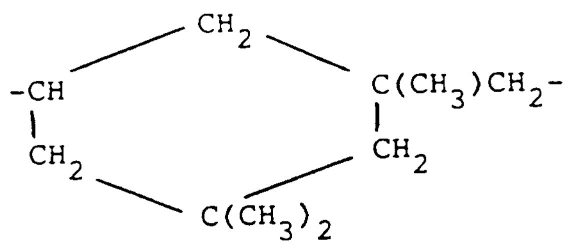

m has an average value of 180 to 230, n has an average value of greater than about 1 up to about 30, e.g., 1.5, x is an integer of about 5 to about 25, and y has an average value of greater than 1 to 10 and a weight average molecular weight of about 150,000 to 200,000 16 wt. % butyl carbitol and 64 wt. % water. A.T. I is a polymer of the type described in US-A-4,426,485.

A.D. I: a solution of 35 wt. % of an anionic dispersant believed to have the formula:

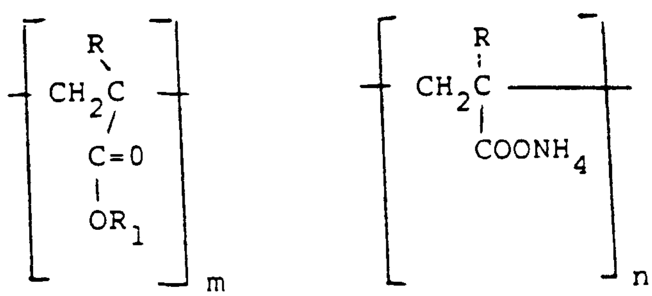

wherein $R_1$ is believed to be a lower alkyl or derivative thereof, m and n are integers and R is hydrogen or lower alkyl; and having a molecular weight of up to about 10,000. An aqueous solution of this anionic dispersant containing 65 wt. % water is marketed as Tamol™ SG-I by Rohm and Haas Company, Philadelphia, Pennsylvania.

Defoaming Solution I: is believed to be a solution of 35 wt. % of a defoamer and 65 wt. % mineral oil marketed as DeeFo (TM) 495 by Ultra Adhesives Inc., of Paterson, New Jersey.

Igepal® C0997: a solution of 70 wt. % of a non-ionic surfactant having the formula:

$C_9H_{19}C_6H_4O(C_2H_4O)_nH$

wherein n is an average of 100 and 30 wt. % water available from GAF Corp., New York, New York. (While "n" is reported by the manufacturer to one about 100, our analytical work indicates that "n" may be closer to 70.)

Tergitol™ NP-40: a solution of 70 wt. % of a non-ionic surfactant having the formula:

$C_9H_{19}C_6H_4O(C_2H_4O)_{40}H$

and 30 wt. % water available from Union Carbide Corporation, Danbury, Connecticut.

The following properties were observed for products of the Examples were obtained from the tests described below.

Hiding Power - ASTM D 2805-70
Gloss - ASTM D 523-78
Scrub Test - ASTM D-2486
Settling - Allowed to stand for about one week or other time periods as noted, after which time the amount of settling was observed.

F.B. Steig, "Pigment/Binder Geometry", in Pigment Handbook, Vol. III (T. Patton, Ed.), Wiley-Interscience (1973) pp 203-217, noted a relationship between hiding power for titanium dioxide paints and pigment volume concentration (PVC). This relationship for conventional paints can be expressed as

Expected Hiding Power (square feet per pound) = 409 [0.9045 -(PVC)$^{1/3}$].

Hence, since pigment volume concentrations vary, the most meaningful comparisons should be related to the percent improvement over the theoretical Steig prediction:

$$\% \text{ Hiding Power over Steig} = 1 - \frac{\text{Observed hiding power}}{\text{Expected Hiding Power}}.$$

## EXAMPLE 1

A. A pigment grind was prepared by premixing the following ingredients in a Cowles mixer.

Table I

| Ingredient | Parts By Weight |
|---|---|
| Water | 250 |
| Propylene glycol | 250 |
| A.T. I | 58 |
| A.D. I | 91 |
| Defoaming Solution I | 20 |
| Titanium dioxide (TiPure R-100) | 2000 |

All of the above ingredients except the pigment were mixed for 30 minutes and then the $TiO_2$ was added gradually while increasing the grinding speed from 1900 rpm to 4900 rpm gradually. Grinding at 4900 rpm was continued for about 30 minutes until a film cast on a Hegman gauge gave a reading of about #7 with no grits. The resulting grind was let down with a mixture of:

Table II

| Ingredient | Parts By Weight |
|---|---|
| A.T. I | 58 |
| Water | 233 |
| Propylene glycol | 233 |

The resulting pigment slurry had a solids content of about 65%.

The following ingredients were mixed in a reactor:

Table III

| Ingredient | Parts By Weight |
|---|---|
| Water | 328 |
| Igepal C0997 (70% aqueous soln.) | 18 |
| Tergitol NP-40 (70% aqueous soln.) | 18 |

The above-mentioned pigment slurry was added in a thin stream in an amount to provide 300g of $TiO_2$ while stirring and avoiding splashing the pigment up on the walls of the reactor. Thereafter, 45 wt. parts of vinyl acetate were added and the reactor contents were heated while stirring and purging with nitrogen. When the temperature of the reactor contents reached 52°C, 20 wt. parts of t-butyl hydroperoxide (3 wt. % aqueous solution) were added. When the reaction temperature passed 56°C, 20 wt. parts of sodium formaldehyde sulfoxylate (3 wt. % aqueous solution) were added. When the reaction temperature passed 62°C, a monomer mixture of 210 wt. parts vinyl acetate and 45 wt. parts of t-butyl acrylate were fed in over a period of 70 minutes at a rate of 3.64 wt. parts/min. and a catalyst solution of 50 wt. parts of t-butyl hydroperoxide (3 wt. % aqueous solution) and 50 wt. parts of sodium formaldehyde sulfoxylate (3 wt. % aqueous solution) were fed in over a period of 100 minutes at the rate of 0.5 wt. part/minute. The reaction temperature was maintained at 65°C while monomer and catalyst were being fed. The temperature was raised to 70°C at the completion of the monomer feed and the reaction mixture was maintained at 70°C for 60 minutes (including the final 30 minutes of feeding the two catalysts). Stirring and a nitrogen blanket were maintained throughout the reaction.

B. The procedure of Example 1A. was repeated, the only exception being that n-butyl acrylate was substituted, weight for weight, for t-butyl acrylate to provide a water-based paint which had no tendency to settle. The resulting water-based paint also had a better gloss, better viscosity stability, equivalent hiding power and less scrub resistance compared to a similar water-based paint made without A.T. I.

EXAMPLES 2-10

Additional latexes were prepared according to the procedure described in Example 1. The amounts of A.T. I, A.D. I and Igepal CO 997 based on the combined weights of $TiO_2$ and monomer were varied to observe the contribution of each component and interactions between the components. The amounts given in Table IV below are weight parts of active ingredient (not solution) per one hundred weight parts of pigment and monomer.

Table IV

| Example: | 2 | 3 | 4 | 5 | 6 | 7 | 8 | 9 | 10 |
|---|---|---|---|---|---|---|---|---|---|
| A. T. I | 0.2 | 1.0 | 0.2 | 1.0 | 0.2 | 1.0 | 0.2 | 1.0 | 0.6 |
| A. D. I | 0.2 | 0.2 | 1.0 | 1.0 | 0.2 | 0.2 | 1.0 | 1.0 | 0.6 |
| CO 997 | 3.0 | 3.0 | 3.0 | 3.0 | 7.0 | 7.0 | 7.0 | 7.0 | 5.0 |

Each resulting product dispersion was tested for hiding power, gloss and settling (short term) and the following results were obtained.

Table V

| Properties | | | | | | | | | |
|---|---|---|---|---|---|---|---|---|---|
| Example: | 2 | 3 | 4 | 5 | 6 | 7 | 8 | 9 | 10 |
| Hiding power, $m^2$ ($ft^2$)/#[a] | 42.1 (138) | 47.9 (157) | 49.1 (161) | 50.6 (166) | 49.4 (162) | 53.6 (176) | 49.4 (162) | 54.9 (180) | 50.0 (164) |
| Hiding power, $m^2$ ($ft^2$)/#[b] | 41.8 (137) | 48.2 (158) | 50.0 (164) | 50.6 (166) | 50.9 (167) | 54.9 (180) | 47.5 (156) | 54.9 (180) | 51.2 (168) |
| % Hiding power over Steig Calculation | 14 | 24 | 29 | 33 | 26 | 35 | 24 | 37 | 30 |
| Gloss, 60° | 78 | 81 | 76 | 85 | 72 | 74 | 78 | 73 | 71 |
| Gloss, 20° | 29 | 41 | 35 | 48 | 26 | 30 | 38 | 31 | 27 |
| Settling | Yes | No | No | No | No | No | No | No | No |

a. Based on the theoretical pigment volume concentration.
b. Based on an analysis of the actual pigment volume concentration.

The hiding power values for Examples 3 to 10 exceed the reported value for rutile-grade $TiO_2$ of $44.8m^2$ (147 square feet) per 454g (pound) (CEH Marketing Research Report, Titanium Dioxide Pigments, Chemical Economics Handbook, SRT International, 1986). Likewise, the product dispersions of Examples 3 through 10 were resistant to settling under ambient conditions. The 60° Gloss values for each of Examples 2 through 10 are considered to be very high for latex paints, when compared to the Gloss values obtained by the process described in US-A-4,608,401.

The above data reveal that each component contributes to the hiding power when employed at suitably high concentrations.

## EXAMPLES 11-19

In Example 11, a pigment grind was prepared by premixing the following ingredients in a Cowles mixer:

Table VI

| Ingredient | Parts By Weight |
|---|---|
| Water | 129.91 |
| Propylene glycol | 389.74 |
| A. T. I | 10 |
| A. D. I | 22.86 |
| Defoaming Solution I | 20 |
| Titanium Dioxide (TiPure R-900) (has a 4.5% max. alumina coating) | 2000 |

All of the above ingredients except the pigment were mixed for 30 minutes and then the $TiO_2$ was added gradually while increasing the grinding speed from 1900 rpm to 4900 rpm gradually. Grinding at 4900 rpm was continued for about 30 minutes until a film cast on a Hegman gauge gave a reading of about #7 with no grits. The resulting grind was let down with a mixture of:

Table VII

| Ingredient | Parts By Weight |
|---|---|
| A. T. I | 30 |
| Water | 519.65 |

The resulting pigment slurry had a solids content of about 65%.

The following ingredients were added in a resin vessel:

Table VIII

| Ingredient | Parts By Weight |
|---|---|
| Water | 164.7 |
| Igepal CO997 (70% aqueous soln.) | 18 |

The subsequent polymerization was conducted in a modified intermittent-type attritor, type B, manufactured by Union Process, Inc. of Akron, Ohio. This attritor was modified to equip it with a 700 cc reaction vessel, a four-necked glass reactor vessel cover, and a 5.1cm (2-inch) Cowles dissolver disc. The disc was rotated at 1,000 rpm which provided vigorous dispersion and grinding of the pigment and reaction medium before and during the polymerization step. In Example 11, the above-mentioned pigment slurry was added in a thin stream in an amount to provide 198.9 wt. parts of $TiO_2$ while stirring and avoiding splashing the pigment up on the walls of the reactor. Thereafter, 30.1 wt. parts of vinyl acetate were added and the reactor contents were heated while stirring and purging with nitrogen. When the temperature of the reactor contents reached 52°C, 13 wt. parts of t-butyl hydroperoxide (3 wt. % aqueous solution) were added. When the reaction temperature passed 56°C, 13 wt. parts of sodium formaldehyde sulfoxylate (3 wt. % aqueous solution) were added. When the reaction temperature passed 62°C, a monomer mixture of 140.7 wt. parts vinyl acetate and 28.1 wt. parts of n-butyl acrylate were fed in over a period of 90 minutes at a rate of 2.05 wt. parts/min. and a catalyst solution of 34 wt. parts of t-butyl hydroperoxide (3 wt. % aqueous solution) and 34 wt. parts of sodium formaldehyde sulfoxylate (3 wt. % aqueous solution) was fed in over a period of 120 minutes at the rate of 0.28 wt. part/minute. The reaction temperature was maintained at 65°C, while monomer and catalyst were being fed and for 1 hour after termination of the monomer feed.

The procedure set forth in Example 11 was followed in Examples 12 through 19 except that the amounts of A. T. I, A. D. I and CO 997 in weight parts of the ingredient used per hundred wt. parts of the combined amounts of titanium dioxide and monomer are given in Table IX below.

Table IX

| Example: | 11 | 12 | 13 | 14 | 15 | 16 | 17 | 18 | 19 |
|---|---|---|---|---|---|---|---|---|---|
| A. T. I | 0.2 | 1.0 | 0.2 | 1.0 | 0.2 | 1.0 | 0.2 | 1.0 | 0.6 |
| A. D. I | 0.2 | 0.2 | 1.0 | 1.0 | 0.2 | 0.2 | 1.0 | 1.0 | 0.6 |
| CO 997 | 3.15 | 3.0 | 3.0 | 3.0 | 7.0 | 7.0 | 7.0 | 7.0 | 5.0 |

The resulting product dispersions in Examples 11 through 19 were tested for hiding power, gloss and settling and the values given in Table X were obtained.

Table X

| Properties | | | | | | | | | |
|---|---|---|---|---|---|---|---|---|---|
| Example: | 11 | 12 | 13 | 14 | 15 | 16 | 17 | 18 | 19 |
| Hiding power, $m^2$ ($ft^2$)/#[a] | 51.8 (170) | 49.7 (163) | 45.7 (150) | 43.9 (144) | 51.8 (170) | 60.7 (199) | 52.1 (171) | 62.2 (204) | 49.4 (162) |
| Hiding power, $m^2$ ($ft^2$)/#[b] | 47.2 (155) | 41.1 (135) | 39.9 (131) | 35.0 (115) | 50.3 (165) | 50.0 (164) | 45.1 (148) | 55.8 (183) | 39.0 (128) |
| % Hiding power over Steig Calculation | 40 | 36 | 23 | 23 | 32 | 54 | 34 | 57 | 34 |
| Gloss, 60° | 69 | 67 | 80 | 66 | 71 | 39 | 60 | 44 | 94 |
| Gloss, 20° | 26 | 17 | 36 | 15 | 26 | 8.5 | 17 | 9.5 | 16 |
| Settling | No | No | No | No | No | No | No | No | No |

a. Based on the theoretical pigment volume concentration.
b. Based on an analysis of the actual pigment volume concentration.

The superior hiding power observed in these Examples appears to result from the vigorous dispersion (grinding) in the presence of A. T. I, A. D. I and CO 997 during the polymerization step. These Examples establish the fact that all three components contribute to the superior hiding power when employed at suitable concentrations.

## EXAMPLE 20

A pigment grind was prepared by premixing 1225 grams of water, 40 grams of DeeFo(TM) 495 (30% solution), 68.6 grams of Tamol(TM) SG-I (35% solution of an ammonium polyacrylic salt available from Rohm and Haas company), and 8 grams of A.T. I (20% solution) in a Cowles mixer for 30 minutes. Then 4000 grams of TiPure(TM) R-900 titanium dioxide (up to 4.5 weight percent alumina coating) were added gradually while increasing the grinding speed from 1900 rpm to 4900 rpm gradually. Grinding at 4900 rpm was continued for about 30 minutes. The resulting grind was diluted with 861 grams of water to produce a 64.86 weight percent solids pigment grind.

A vinyl acrylic encapsulated pigment was prepared by premixing 725 grams of water and 128.6 grams of Igepal™ CO-997 (70% solution) in a four-liter reactor. Then 1402.79 grams of the above pigment grind containing 900 grams of titanium dioxide were added, and the mixture was mixed thoroughly for 25 minutes at 23°C. The reactor was heated slowly in a water bath to 45°C and 135 grams of vinyl acetate were added. When the reactor temperature reached 50°C, 30 grams of t-butyl hydroperoxide (3% aqueous solution) were added. At 55°C, 30 grams of sodium formaldehyde sulfoxylate (3% aqueous solution) were added, and the mixture was heated to 65°C for an additional 39 minutes.

Then 657 grams of vinyl acetate and 108 grams of butyl acrylate were added as a mixture over a 90 minute period (a 9.16 cc/min feed rate). During the same period 90 grams of t-butyl hydroperoxide (1% aqueous solution) and 90 grams of sodium formaldehyde sulfoxylate (1% aqueous solution) were added over a 120 minute period or a feed rate of 0.75 cc/min. The product was heated an additional 30 minutes at 65°C, cooled to ambient temperature and stored in a glass container.

Three containers of the above vinyl acrylic encapsulated pigment were blended with one container of vinyl acrylic encapsulate pigment prepared in the same manner except that it contained 0.15% A.T. I. The composite contained 0.115 weight percent A.T. I.

The hydrophobic polymer coating had a number average molecular weight of 51,000 and the product had an Encapsulation Efficiency of 97.5%, good stability after standing under ambient conditions of 3 months and a hiding power of 46.5$m^2$ (152.4 square feet) per 454g (pound) of titanium dioxide or a 19% improvement over Steig predictions for conventional paints.

EXAMPLE 21

A pigment grind was prepared by premixing 120 grams of water, 30 grams of DeeFo(TM), 495 (30% solution), 102.9 grams of Tamol(TM) SG-I (35% solution), and 7863.69 grams of DuPont TiPure(TM) R-940 slurry (76.3% aqueous solution of TiPure R-900 containing a dispersant, biocide and defoamer) in a Cowles mixer. Then a mixture of 90 grams of A.T. I (20% solution) and 500 grams of water was added gradually to the above mixture and stirred at a dispersing speed of 1500 rpm. Mixing at 1500 rpm was continued for about 30 minutes. The resulting mixture was diluted with 726.7 grams of water to produce a 64.27 weight percent solids pigment grind.

A vinyl acrylic encapsulated pigment was prepared by premixing 110 grams of water and 3 grams of maleic acid. Then 128.6 grams of Igepal(TM) CO-990 (35% solution of Igepal" CO-997 in water and 667.15 grams of the pigment grind containing 424.34 grams of titanium dioxide were added with stirring to a two-liter reactor. After stirring the mixture for 45 minutes with a Lightnin™ mixer the reactor was heated slowly with a water bath to 63°C. Then 63.45 grams of vinyl acetate, 30 grams of t-butyl hydroperoxide (0.75% aqueous solution) and 30 grams of sodium formaldehyde sulfoxylate (0.75% aqueous solution) were added and the mixture was heated to 65°C for an additional 16 minutes.

Then 296.4 grams of vinyl acetate and 63.2 grams of butyl acrylate were added as a mixture over a 157 minute period (a 2.5 cc/min feed rate). During the same period 50 grams of t-butyl hydroperoxide (0.1875% aqueous solution) and 50 grams of sodium formaldehyde sulfoxylate (0.1875% aqueous solution) were added over a 157 minute period (a feed rate of 0.316 cc/min). A catalyst composed of 5 grams of 3% t-butyl hydroperoxide and 5 grams of 3% aqueous sodium formaldehyde sulfoxylate was added and the mixture was heated an additional sulfoxylate was added and the mixture was heated an additional 24 minutes at 65°C. The product was cooled to ambient temperature and stored in a glass container.

The hydrophobic polymer coating had a number average molecular weight of 90,000 and the product had an Encapsulation Efficiency of 95%, passed 1200 scrub cycles and exhibited a 21.8% better $TiO_2$ Scattering Coefficient (by the procedure disclosed in National Bureau of Standards Research Paper No. 1026) than a paint based commercial latex UCAR 376 when both contained 908g (2 pounds) of titanium dioxide per 3.79 liters (gallon).

EXAMPLES 22 to 28

In these examples the following general procedure is used. A pigment grind is prepared by premixing 218.81 grams of water, 6 grams of the below noted amphiphilic polymer, 68.57 grams of TAMOL™ SG-I, 20.0 grams of DeeFo™ 495, and 368.44 grams of propylene glycol. To the premix is added 2000 grams of TiPure™ R-900 titanium dioxide while the premix is under agitation in a Cowles mixer. The mixing speed is increased from about 1900 to 4900 rpm during the addition. The grinding continues for about 30 minutes at about 4900 rpm. The resulting grind is then diluted with about 491 grams of water and 18 grams of the below noted amphiphilic polymer.

A vinyl acrylic monomer solution is prepared by mixing 767.2 grams of water, 128.58 grams of Igepal™ CO997. This mixture is then added to about 1436 grams of the pigment grind and mixed thoroughly for about 30 minutes at ambient temperature. This mixture, while being mixed at a rate sufficient to maintain a vortex or about 250 rpm, is gradually heated to about 65°C. During this heating process 135 grams of vinyl acetate, 60 grams of a 3 percent aqueous t-butyl hydroperoxide solution and 60 grams of a 3 percent aqueous sodium formaldehyde sulfoxylate solution are added. Once this reaction mixture reaches 65°C it is maintained under the agitation for about 30 minutes and then a mixture of vinyl acetate and butyl acrylate (in an approximate weight ratio of 5:1) is added at a feed rate of about 11.8 milliliters per minute for about 70 minutes. Starting at the same time an equal weight aqueous mixture of t-butyl hydroperoxide and sodium formaldehyde sulfoxylate (both at 3% concentration) are added at a feed rate of about 1.5 milliliters per minute for a period of about 100 minutes. After all monomer and catalyst are added, the reaction mixture is maintained at 65°C for about 30 minutes. Table XI provides a summary of examples 22 to 28

TABLE XI

| Example | Associative Thickener | % Hiding Power over Steig Calculation | Ambient Stability at 8 months | Encapsulation Efficiency, % | Scrub Resistance |
|---|---|---|---|---|---|
| 22 | A. T. I | 30 | - | 80 | 104 |
| 23 | Cellulosic[a] | 35 | - | 74 | 198 |
| 24 | A. T. II[b] | 38 | | 90 | 205 |
| 25 | A. T. III[c] | 17 | - | 46 | 121 |
| 26 | A. T. IV[d] | 26 | - | 44 | 175 |
| 27[e] | Cellulosic[f] | 37 | - | 41 | 103 |
| 28[e] | Cellulosic[g] | 29 | | 50 | 146 |

Footnotes:

[a] A hydrophobized cellulosic thickener available as Natrasol Plus™ from Hercules Inc., Wilmington, Delaware.

[b] An ethoxylated polymer having pendant nonylphenol groups available as QR-708 from Rohm and Haas Company, Philadelphia, Pennsylvania.

[c] An associative thickener similar to A. T. I except that the hydrophobic groups are lauryloxy groups and the thickener has a weight average molecular weight of about 110,000.

[d] An associative thickener similar to A. T. I except that the hydrophobic groups are lauryloxy groups and the thickener has a weight average molecular weight of about 8700.

[e] Comparative

[f] A cellulosic thickener having a viscosity of about 1100 to 1450 cps as a 1 percent by weight solution in water available as QP-15000H from Union Carbide Corporation, Danbury, Connecticut.

[g] A cellulosic thickener having a viscosity of 4800 to 5600 cps as a 2 percent by weight solution in water available as QP-4400H from Union Carbide Corporation, Danbury, Connecticut.

EXAMPLES 29 to 31

In these examples the following general procedure is used. A pigment grind is prepared by premixing 980.25 grams of water and 42.9 grams of Tamol™ SG-I. To the premix is added 2500 grams of TiPure (TM) R-900 titanium dioxide while the premix is under agitation in a Cowles mixer. The mixing speed is increased from about 1900 to 4900 rpm during the addition. The grinding continues for about 30 minutes at about 4900 rpm. The resulting grind is then diluted with about 250 grams of water and 357.1 grams of Tergitol™ NP-70.

A vinyl acrylic monomer solution is prepared by mixing 318 grams of water, 32.2 grams of Tergitol™ NP-70 for examples 29 and 30 only and 7.20 grams of sodium acetate (25% aqueous solution) for examples 29 and 31 only. This mixture is then added to about 740 to 750 grams of the pigment grind and the amphiphilic polymer, if any, as noted below, and mixed thoroughly for about 30 minutes at ambient

temperature. This mixture, while being mixed at about 250 rpm, is gradually heated to about 65 °C. During this heating process 67.5 grams of vinyl acetate, 10 grams of a 3 percent aqueous t-butyl hydroperoxide solution and 10 grams of a 3 percent aqueous solution of sodium formaldehyde sulfoxylate are added. Once this reaction mixture reaches 65 °C it is maintained under the agitation for about 30 minutes and then a mixture of vinyl acetate and butyl acrylate (in an approximate weight ratio of 5:1) is added at a feed rate of about 4.6 milliliters per minute for about 90 minutes. Starting at the same time an equal weight aqueous mixture of t-butyl hydroperoxide and sodium formaldehyde sulfoxylate (both at 3% concentration) are added in separate streams at a feed rate of about 25 milliliters per minute for a period of about 120 minutes. After all monomer and catalyst are added, the reaction mixture is maintained at 65 °C for about 30 minutes. Table XII provides a summary of these examples.

TABLE XII

| Example | Associative Thickener | Amount of Associative Thickener, g | Other Additives | Amount of Other Additives, g | % Hiding Power over Steig Calculation | Ambient Stability at 8 months | Encapsulation Efficiency, % |
|---|---|---|---|---|---|---|---|
| 29[a] | None | | Sodium Acetate | 1.8 (dry) | 22 | Marginal | 99 |
| 30 | A. T. I | 6.75 | | - | 26 | Stable | 83 |
| 31 | A. T. I | 6.75 | Sodium Acetate | 1.8 (dry) | 22 | Marginal | 103 |

Footnotes: a - comparative

EXAMPLES 32 to 34

In these examples the following general procedure is used. A pigment grind is prepared by premixing 700 grams of water and 111.54 grams of TAMOL™ SG-I. To the premix is added 3250 grams of TiPure (TM) R-900 titanium dioxide while the premix is under agitation in a Cowles mixer. The mixing speed is

increased from about 1900 to 4900 rpm during the addition. The grinding continues for about 30 minutes at about 4900 rpm. The resulting grind is then diluted with about 907.13 grams of water and 464.23 grams of Tergitol™ NP-70.

A vinyl acrylic monomer solution is prepared by mixing 320 grams of water and, 32.2 grams of Tergitol™ NP-70 (for Examples 32 and 33 only). This mixture is then added to about 750 grams of the pigment grind and amphiphilic polymer, if any, as noted below. In Example 33, 7.2 grams of a 25 weight percent aqueous solution of sodium acetate are also added. This composition is mixed thoroughly for about 30 minutes at ambient temperature. This mixture, while being mixed at about 250 rpm, is gradually heated to about 65°C. During this heating process 67.5 grams of vinyl acetate, 10 grams of a 3 percent aqueous solution of t-butyl hydroperoxide and 35 grams of a 3 percent aqueous solution of sodium formaldehyde sulfoxylate are added. Once this reaction mixture reaches 65°C it is maintained under the agitation for about 30 minutes and then a mixture of vinyl acetate and butyl acrylate (in an approximate weight ratio of 5:1) is added at a feed rate of about 4.58 milliliters per minute for about 90 minutes. Starting at the same time 3 weight percent aqueous solution of t-butyl hydroperoxide is added at a feed rate of about 0.21 milliliters per minute for a period of about 120 minutes. After all monomer and catalyst are added, the reaction mixture is maintained at 65°C for about 30 minutes. Table XIII provides a summary of these examples.

TABLE XIII

| Example | Associative Thickener | Amount of Associative Thickener.g | Other Additives | % Hiding power over Steig Calculation | Ambient stability at 8 months | Encapsulation Efficiency % |
|---|---|---|---|---|---|---|
| 32a | None | | | 20 | Marginal | 29 |
| 33 | A.T.I. | 6.75 | Sodium Acetate | 24 | Stable | 62 |
| 34 | A.T.I. | 6.75 | | 22 | Marginal | 62 |

Footnotes: a - comparative

EXAMPLE 35 to 60

A pigment grind for use in Examples 35 to 45 is prepared as follows. A stainless steel beaker is charged with about 400 grams of an aqueous solution containing 10 weight percent ethoxylate A as

identified in Table XIV below, about 306.3 grams of an aqueous butyl carbitol solution (90/10 parts on a weight basis) which optionally contains the weight percent of component B set forth in Table XIV, 5 grams of acetic acid, 10 grams of DeeFo(TM) 495, and 225 grams of distilled water and the components are mixed using a Cowles Mixer operating at about 1000 rpm for about 5 minutes. The speed of the mixer is increased to about 5000 rpm and then 2000 grams of TiPure(TM) R-900 titanium dioxide are slowly added in increments of about 200 grams. The mixing is continued for about 30 minutes after addition of the titanium dioxide and the pigment grind yields a reading of about 7 on the Hegman gauge. This slurry is referred to as the pigment grind for examples 35 to 45 and various portions are used in the following procedures.

A pigment grind for use in Exaples 46 to 60 is prepared as follows. The stainless steel beaker is charged with about 450 grams of water, 34.3 grams of Tamol™ SG-I, and 20 grams of DeeFo™ 495. This mixture is stirred using a Cowles Mixer and about 2000 grams of TiPure™ R-900 titanium dioxide are slowly added while increasing the mixing speed to about 4500 rpm. About 30 grams of water are added to improve stirring. The mixture is stirred for an additional 30 minutes and about 30 grams of A.T. I and about 563 grams of water are added while the mixture is being stirred. The mixture is then stirred for an additional 30 minutes. Portions of this pigment grind are used in the procedure of Examples 46 to 60.

The following procedure is used for encapsulation in Examples 35 to 47. A three liter flask fitted with a water reflux condenser/nitrogen outlet, mechanical stirrer, thermocouple, nitrogen inlet, initiator feed lines and monomer feed line is used to achieve encapsulation. The flask is charged with about 623.3 grams of the pigment grind (70 weight percent solids), about 142 grams of distilled water and a 10 weight percent aqueous solution of component C in the amounts identified in Table XIV. The mixture is maintained under nitrogen purge at a stirring rate sufficient to maintain a slight vortex for the encapsulation. Monomer (vinyl acetate/butyl acrylate in abut a 5.7:1 weight ratio) is provided to the flask at a feed rate of about 2.35 grams per minute for about 180 minutes. An aqueous solution of 0.4 weight percent t-butyl hydroperoxide and an equal weight amount of an aqueous solution of 0.4 weight percent sodium formaldehyde sulfoxylate are fed into the reactor in about 15 minutes (about 100 grams of combined solution). The temperature of the mixture is initially about 55°C and is allowed to increase to about 65°C. After the initial monomer and catalyst feed, an additional 50 grams of each of the t-butyl hydroperoxide and sodium formaldehyde sulfoxylate solutions are fed to the mixture, each at a rate of about 0.25 grams per minute. After the second addition of catalyst, the mixture is continued to be stirred for about 30 minutes at 65°C. Thereafter a further charge of catalyst (5 grams of a 3 weight percent aqueous solution of t-butyl hydroperoxide and 5 grams of a 3 weight percent aqueous solution of sodium formaldehyde sulfoxylate) is made and the mixture is maintained at about 65°C for an additional 15 minutes.

The following procedure is used for encapsulation in Examples 48 to 60. A three liter flask fitted with a water reflux condenser/nitrogen outlet, mechanical stirrer, thermocouple, nitrogen inlet, initiator feed lines and monomer feed line is used to achieve encapsulation. The flask is charged with about 704 grams of the pigment grind (65 weight percent solids) and the material(s) identified as component C in Table XIV. The mixture is maintained under nitrogen purge at a stirring rate sufficient to maintain a slight vortex for the encapsulation. The mixture is heated to 45°C. The reaction temperature is controlled using a heated water bath. About 67.5 grams of vinyl acetate is charged to the flask. As the reaction temperature is raised to 50° C., about 22 grams of an aqueous solution of 3 percent t-butyl hydroperoxide is fed into the reactor in about 15 minutes. The reactor temperature is raised to 55° C. and about 22 grams of an aqueous solution of 3 percent sodium formaldehyde sulfoxylate is fed into the reactor within 10 minutes. The mixture is heated to 65° C. and maintained at this temperature for 30 minutes. Monomer (vinyl acetate/butyl acrylate in a 6:1 weight ratio) is provided to the flask at a feed rate of about 3.19 grams per minute for about 120 minutes. About 40 grams of an aqueous solution of 1 percent t-butyl hydroperoxide and 40 grams of a similar solution of sodium formaldehyde sulfoxylate are fed to the mixture of a rate of about 0.27 grams per minutes. After complete addition of the initiator solutions the mixture is maintained at 65° C. for 30 minutes.

The examples are summarized in Table XIV.

TABLE XIV

| Example | In Pigment Grind: Ethoxylate A | Amount, g | Component B | Amount, g | In Encapsulation Process: Component C | Amount, g | One Day Stability | 30 Day Stability | Encapsulation Efficiency, % |
|---|---|---|---|---|---|---|---|---|---|
| 35 | DB[a] | 153.1 | - | - | BNP[b] | 84.9 | Good | Good | 58.5 |
| 36 | DB | 306.3 | - | - | BNP | 45.3 | Good | Good | 99.2 |
| 37 | DB | 306.3 | BNP | 400 | - | - | Good | Good | 82.7 |
| 38. | DB | 306.3 | - | - | BNP | 84.6 | Good | Good | 131.0 |
| 39 | DB | 306.3 | BNP | 400 | BNP | 42.3 | Good | Good | 97.5 |
| 40 | DB | 153.1 | BNP | 200 | - | - | Very Poor | - | v.h.[o] |
| 41 | DB | 153.1 | BNP | 200 | BNP | 42.6 | Very Poor | - | v.h. |
| 42 | DB | 612.5 | BNP | 200 | | | Good | Good | 104.3 |
| 43 | DB | 612.5 | BNP | 200 | DB | 64.8 | Good | Good | 93.9 |
| 44 | DB | 306.3 | BNP | 400 | DB | 64.8 | Good | Good | 96.7 |
| 45 | DB | 612.5 | BNP | 200 | BNP | 85.9 | Good | Good | 90.6 |
| 46 | A. T. I | - | | | DB<br>BNP | 194.4<br>42.3 | Good | Good | 96.6 |
| 47 | A. T. I | - | | | DB<br>BNP | 129.6<br>84.6 | Good | Good | 100.8 |
| 48 | A. T. I | - | | | DB[c]<br>BNP[d] | 457<br>4.53 | Good | Good | 99.8 |
| 49 | A. T. I | - | | | DB[e]<br>BNP[d] | 457<br>9.05 | Good | Good | 100.6 |

TABLE XIV
(Continued)

| Example | In Pigment Grind: Ethoxylate A | In Pigment Grind: Amount, g | In Pigment Grind: Component B | In Pigment Grind: Amount, g | In Encapsulation Process: Component C | In Encapsulation Process: Amount, g | One Day Stability | 30 Day Stability | Encapsulation Efficiency, % |
|---|---|---|---|---|---|---|---|---|---|
| 50 | A. T. I | - | | | DB[f]<br>BNP[d] | 477<br>4.53 | Marginal | - | 92.2 |
| 51 | A. T. I | - | | | DB[c]<br>IGEPAL CO 997 | 457<br>4.5 | Marginal | - | 90.0 |
| 52 | A. T. I | - | | | DB-40[g] | 137 | Poor | - | v.h. |
| 53 | A. T. I | - | | | DB-70[h] | 137 | Poor | - | v.h. |
| 54 | A. T. I | - | | | DB-100[i] | 137 | Good | Good | 106.3 |
| 55 | A. T. I | - | | | DB-100x[j] | 132 | Good | Good | 98.7 |
| 56 | A. T. I | - | | | DB-120[k] | 477 | Good | Good | 100.6 |
| 57 | A. T. I | - | | | DB-76[l] | 130 | Poor | - | v.h. |
| 58 | A. T. I | - | | | DB[c] | 450 | Poor | - | v.h. |
| 59 | A. T. I | - | | | PBNP-L[m] | 137 | Marginal | - | 99.7 |
| 60 | A. T. I | - | | | PBNP-H[n] | 137 | Poor | - | v.h. |

Footnotes:

[a] DB is a solution containing bisnonylphenol terminated ethoxylate urethane having the structure

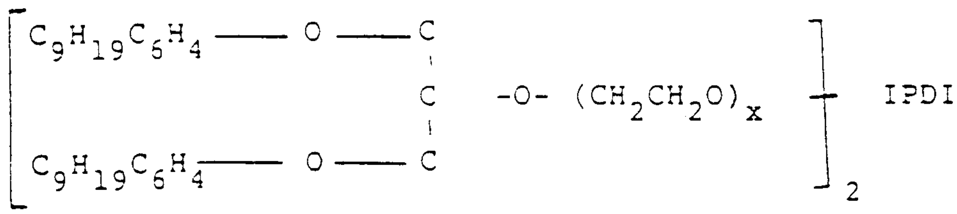

wherein x is about 120 and IPDI is the reaction residue from isophorone diisocyante. DB is provided as a 10 percent by weight solution in a 90/10 (weight parts) of water/butyl carbitol.

[b] BNP is a solution containing bisnonylphenol terminated ethoxylate having the structure

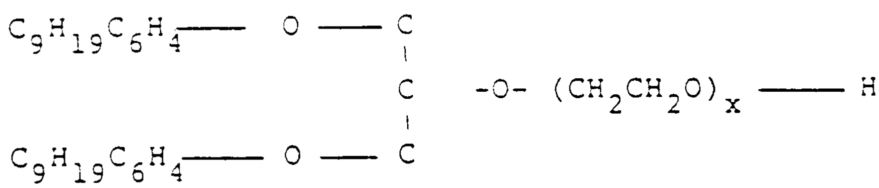

wherein x is about 120. BNP Is provided as a 10 weight percent aqueous solution.

[c] Provided as a 2 weight percent solution in 90/10 weight parts water/butyl carbitol.

[d] Provided as solid ethoxylate.

[e] Provided as a 1 weight percent solution in 95/5 weight parts water/butyl carbitol.

[f] Provided as a 0.95 weight percent solution in 90/10 weight parts water/butyl carbitol.

[g] DB-40 is a solution containing bisnonylphenol terminated urethane having the structure

$$[C_9H_{19}C_6H_4\ \text{-O-}\ (CH_2CH_2O)_x]_2\text{-IPDI}$$

wherein x is about 40. DB-40 is provided as a 35 weight percent aqueous solution.

[h] DB-70 is a solution similar to DB-40 except x is about 70.

[i] DB-100 is a solution similar to DB-40 except x is about 100.

[j] DB-100x is similar to DB-100 except instead of IPDI, the urethane moiety is based on DESMODUR™ N3390, a trifunctional aliphatic isocyanate available from Mobay Chemical Co., Pittsburgh, Pennsylvania, and three ethoxylate chains extend from the urethane moiety.

[k] DB-120 is a solution similar to DB except that x is about 120 and the solution a 4.7 weight percent solution in 80/20 parts by weight water/butyl carbitol.

[l] DB-76 is a solution similar to DB except x is about 76 and the solution is a 17.8 weight percent solution in 90/10 parts by weight water/butyl carbitol.

[m] PBNP-L is a solution of a low molecular weight ethoxylated urethane polymer having the structure

$$\left[\begin{array}{l} C_9H_{19} - O - C \\ \qquad\qquad\quad | \\ \qquad\qquad\quad C - O - (CH_2CH_2O)_{160} - IPDI \\ \qquad\qquad\quad | \\ C_9H_{19} - O - C \end{array}\right]_n$$

The number average molecular weight is about 20,000. The solution is about 17.5 weight percent in 80/20 parts by weight of water/butyl carbitol.

[n] PBNP-H is a solution similar to PBNP-1 except that the polymer is higher molecular weight, i.e., about 50,000 on a number average molecular weight basis.

[o] The Encapsulation Efficiency of these Examples is believed to be very high, e.g., approaching 100 percent. Since the dispersion of the particles is not stable, difficulties exist in precisely determining the Encapsulation Efficiency.

## Claims

1. A process for preparing stable aqueous dispersions of water-insoluble particulate solids said particles having a hydrophilic surface and having a coating of a hydrophobic polymer adhering to said surface, comprising the steps of forming a dispersion of the particulate solids in water in the presence of a polymeric associative thickener in an amount sufficient to provide particle stabilzation and to create a hydrophobic zone at said surface, said associative thickener comprising a polymer having a weight average molecular weight of at least about 10,000 and, in the average molecule, a hydrophilic backbone and an average of more than one pendant hydrophobic group connected to said hydrophilic backbone, and polymerizing at least one monomer or prepolymer polymerizable to a hydrophobic polymer in said aqueous dispersion in the presence of said polymeric associative thickener, wherein the hydrophobic polymer coats the particles at the surface thereof in the hydrophobic zone.

2. Process as claimed in claim 1 wherein said associative thickener comprises bunched hydrophobic groups, e.g. terminal hydrophobic groups connected to said hydrophilic backbone.

3. Process as claimed in claim 2 wherein said polymeric associative thickener has the formula:

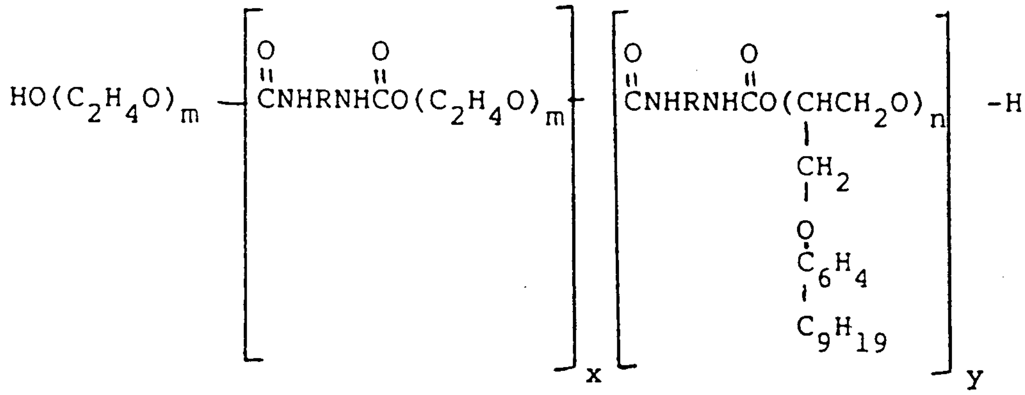

wherein R is a divalent organic group selected from the class consisting of alkylene, arylene, alkenylene, alkarylene, aralkylene, cycloalkylene and cycloalkenylene; m is a number having an average value of about 90 to about 320; n is a number having an average value at least about 1; x is a number having an average value greater than about 1, and y is a number having an average value greater than about 1.

4. Process as claimed in claim 3 wherein R is a cycloalkylene group having the formula:

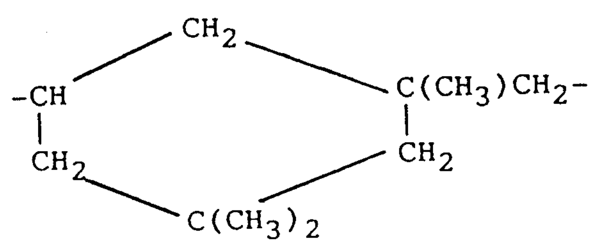

m has an average value of about 180 to about 230; n is a number having an average value greater than about 1 up to about 30; x has an average value of about 5 to about 25, and y had an average value of greater than about 1 to about 10.

5. Process as claimed in one or more of claims 1 to 4 wherein said polymeric associative thickener is present in an amount of about 0.01 to about 5% by weight of the particulate solids.

6. Process as claimed in one or more of claims 1 to 5 wherein polymerization is carried out in the presence of a non-ionic surfactant.

7. Process as claimed in claim 6 wherein said non-ionic surfactant is present in an amount of about 1 to about 20% by weight of the particulate solids.

8. Process as claimed in claims 6 or 7 wherein said non-ionic surfactant comprises a hydrophilic chain and one hydrophobic end group per molecule.

9. Process as claimed in one or more of claims 1 to 8 wherein said dispersion is formed in the presence of at least one anionic dispersant.

10. Process as claimed in claim 9 wherein said anionic dispersant is present in an amount of about 0.1 to about 10% by weight of the particulate solids.

11. Process as claimed in one or more of claims 1 to 10 wherein said anionic dispersant comprises an acrylic polymer having a carbon to carbon backbone and pendant carboxyl-containing groups and

carboxylate ester-containing groups attached to said backbone.

**12.** Process as claimed in one or more of claims 1 to 11 wherein high shear mixing is used in forming said dispersion.

**13.** Process as claimed in one or more of claims 1 to 12 wherein the particulate solids have a mean diameter of less than 2 µm.

**14.** Process as claimed in one or more of claims 1 to 13 wherein said steps of forming a dispersion and polymerizing are carried out concurrently in the same vessel.

**15.** Process as claimed in one or more of claims 1 to 14 wherein said dispersing step and optionally also the polymerizing step is carried out in the presence of up to 50% by weight of the particulate solids of propylene glycol.

**16.** Process as claimed in one or more of claims 1 to 15 wherein said particulate solids are $TiO_2$ particles.

**17.** Process as claimed in one or more of claims 1 to 16 wherein said hydrophobic polymer is formed by copolymerizing vinyl acetate and tert-butyl acrylate.

**18.** A stable aqueous dispersion comprising dispersed in an aqueous phase particulate solids having a mean particle diameter of less than 2 µm having on the surface thereof a coating of a hydrophobic polymer in which the particles are stabilized by a polymeric associative thickener comprising a polymer having a weight average molecular weight of at least 10,000 and, in the average molecule, a hydrophilic backbone and an average of more than one pendant hydrophobic group bonded to said hydrophilic backbone, said polymeric associative thickener being present in an amount sufficient to provide particle stabilization, and a non-ionic surfactant in an amount sufficient to form a stable aqueous dispersion of the particulate solids.

**19.** Stable aqueous dispersion as claimed in claim 18 wherein said polymeric associative thickener is present in an amount of about 0.01 to about 5% by weight of the particulate solids and said non-ionic surfactant is present in an amount of about 1 to about 20% by weight of the particulate solids.

**20.** Stable aqueous dispersion as claimed in claims 18 or 19 wherein said particulate solids are $TiO_2$ particles.

**21.** Stable aqueous dispersion as claimed in one or more of claims 18 to 20 wherein said polymeric associative thickener comprises a hydrophilic backbone comprising a polyoxyethylene chain and hydrophobic groups comprising octylphenoxy and/or nonylphenoxy groups connected to said hydrophilic backbone.

**22.** Stable aqueous dispersion as claimed in one or more of claims 18 to 21 wherein said polymeric associative thikkener comprises pendant hydrophobic groups connected to said hydrophilic backbone at spaced, intermediate carbon atoms of said backbone.

**23.** Stable aqueous dispersion as claimed in one or more of claims 18 to 22 wherein said polymeric associative thickener has the formula:

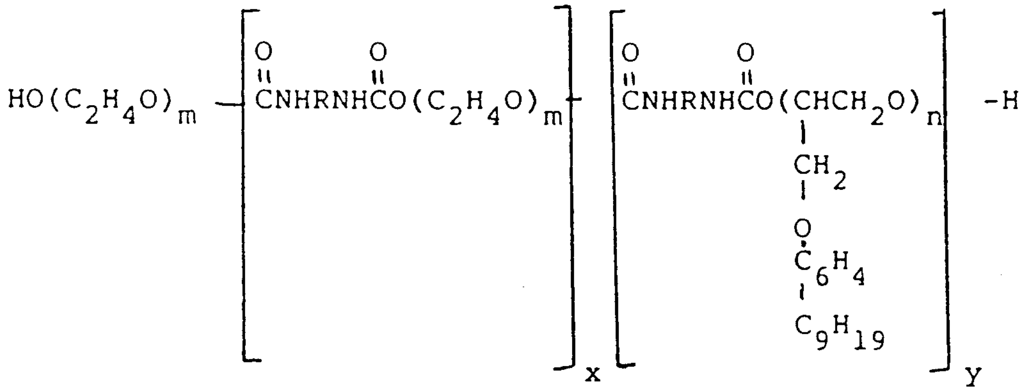

wherein R is a divalent organic group selected from the class consisting of alkylene, arylene, alkenylene, alkarylene, aralkylene, cycloalkylene and cycloalkenylene; m is a mumber having an average value of about 90 to about 320; n is a number having an average value greater than about 1; x is a number having an average value greater than about 1, and y is a number having an average value greater than about 1.

**24.** Stable aqueous dispersion as claimed in one or more of claims 18 to 23 wherein R is a cycloalkylene group having the formula:

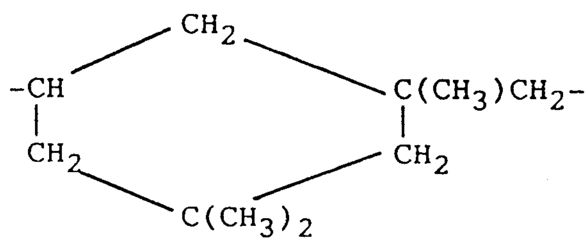

m has an average value of about 180 to about 230; n is a number having an average value greater than about 1 up to about 30; x has an average value of about 5 to about 25, and y has an average value of greater than about 1 to about 10.

**25.** Stable aqueous dispersion as claimed in one or more of claims 18 to 24 wherein said polymeric associative thikkener is present in an amount of about 0.01 to about 5% by weight of the particulate solids and said non-ionic sufactant is present in an amount of about 1 to about 20% by weight of the particulate solids.

**26.** Stable aqueous dispersion as claimed in one or more of claims 18 to 25 wherein said hydrophobic groups of said polymeric associative thickener are terminal hydrophobic groups.

**27.** A composite comprising a solid substrate having a coating thereon, said coating comprising hydrophobic polymer having dispersed therewith polymeric associative thickener, said polymeric associative thickener comprising a polymer having a weight average molecular weight of at least about 10,000 and in the average molecule a hydrophilic backbone and an average of more than one pendant hydrophobic group connected to said hydrophilic backbone.

**28.** The composite of claim 27 wherein the substrate is comprised of solid particles of a size capable of being dispersed in a liquid medium.

**29.** A composition comprising a liquid menstruum having dispersed therein composite particles of claims 27 or 28 and optionally at least one polymeric compound capable of forming a coating on a substrate.

**30.** A process for producing a composite comprising:

(a) contacting with an aqueous medium (i) solid substrate, said solid substrate having a surface capable of adsorbing hydrophilic polymers, (ii) a sufficient amount of a polymeric associative thickener to enhance the compatibility of the surface with lipophilic components, said polymeric associative thikener comprising a polymer having a weight average molecular weight of at least about 10,000 and in the average molecule a hydrophilic backbone and an average of more than one pendant hydrophobic group connected to said hydrophilic backbone, and (iii) at least one polymerizable component capable of forming hydrophobic polymer; and

(b) polymerizing said at least one polymerizable component from said aqueous medium to form a hydrophobic coating on said substrate and provide said composite.

**31.** The process of claim 30 wherein said polymeric associative thickener is present in an amount sufficient to enhance the Encapsulation Efficiency to at least 85 percent, especially at least about 90 percent.

**32.** The process of claims 30 or 31 wherein the substrate is in the form of solid particles which are less than about 2 $\mu$m in diameter, said particles being capable of being dispersed and are dispersed in said aqueous medium during the process.

**33.** The process of one or more of claims 30 to 32 wherein said aqueous medium further comprises non-ionic or anionic surfactant in an amount sufficient to enhance Encapsulation Efficiency.

**34.** The process of one or more of claims 30 to 33 wherein the substrate particles comprise titanium dioxide and hydrophobic polymer coating is of sufficient thickness to enhance the hiding power of the titanium dioxide in a paint composition.

**35.** An encapsulated particle as obtained during the process according to claim 1 comprising a particle having adsorbed on its surface a polymeric associative thickener through the hydrophilic backbone of said thickener, said polymeric associative thickener containing an average of more than one pendant hydrophobic group bonded to said hydrophilic backbone, said particle having an exterior coating of a hydrophobic polymer.

**36.** An encapsulated particle as defined in claim 35 wherein the particle is titanium dioxide.

**37.** An encapsulated particle as defined in claims 35 or 36 wherein the polymeric associative thickener has a polyoxyethylene hydrophilic backbone and at least one of octylphenoxy and nonylphenoxy hydrophobic pendant groups.

**38.** An encapsulated particle as defined in one or more of claims 35 or 37 wherein said particle has a diameter of less than about 2 $\mu$m and said polymeric associative thickener has a weight average molecular weight of at least about 10,000.

**39.** An encapsulated particle as defined in one or more of claims 35 or 38 wherein the polymeric associative thickener has the formula:

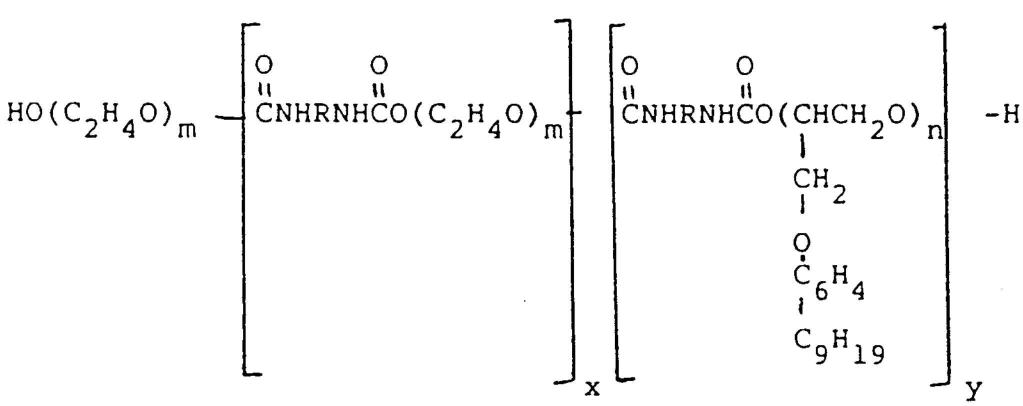

wherein R is a divalent organic group selected from the class consisting of alkylene, arylene, alkenylene, alkarylene, aralkylene, cycloalkylene and cycloalkenylene; m has an average value of about 90 to about 320; n has an average value greater than about 1; x has an average value greater than about 1, and y has an average value greater than about 1.

**40.** An encapsulated particle as defined in claim 39 wherein R is a cycloalkylene group having the formula:

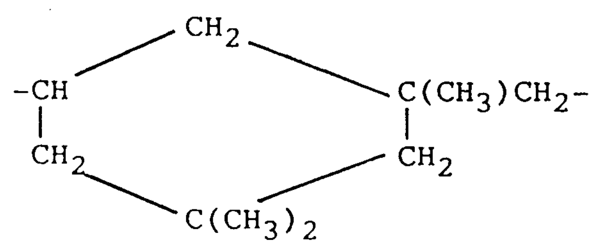

m has an average value of about 180 to about 230; n has an average value greater than about 1 up to about 30; x has an average value of about 5 to about 25, and y has an average value of greater than about 1 to about 10.

**41.** An aqueous dispersion containing encapsulated particles defined in claims 35 to 40.

**Patentansprüche**

**1.** Verfahren zur Herstellung stabiler wäßriger Dispersionen wasserunlöslicher Feststoffteilchen, wobei diese Teilchen eine hydrophile Oberfläche und eine Beschichtung aus einem an dieser Oberfläche anhaftenden hydrophoben Polymer besitzen, welches die Schritte umfaßt, daß man eine Dispersion der Feststoffteilchen in Wasser in Gegenwart eines polymeren assoziierenden Verdickungsmittels in einer zur Teilchenstabilisierung und Schaffung einer hydrophoben Zone auf der besagten Oberfläche ausreichenden Menge bereitet, wobei das besagte assoziierende Verdickungsmittel ein Polymer umfaßt, das ein massengemitteltes Molekulargewicht von mindestens etwa 10 000 und in einem durchschnittlichen Molekül eine hydrophile Hauptkette und im Durchschnitt mehr als eine an die besagte hydrophile Hauptkette gebundene hydrophobe Seitengruppe aufweist, und daß man mindestens ein Monomer oder Prepolymer, das zu einem hydrophoben Polymer polymerisierbar ist, in der besagten wäßrigen Dispersion in Gegenwart des besagten polymeren assoziierenden Verdickungsmittels polymerisiert, wobei das hydrophobe Polymer die Teilchen an ihrer Oberfläche in der hydrophoben Zone umhüllt.

**2.** Verfahren nach Anspruch 1, worin das besagte assoziierende Verdickungsmittel gebündelte (bunched) hydrophobe Gruppen umfaßt, z.B. endständige, an die besagte hydrophile Hauptkette gebundene hydrophobe Gruppen.

3. Verfahren nach Anspruch 2, worin das besagte polymere assoziierende Verdickungsmittel die Formel:

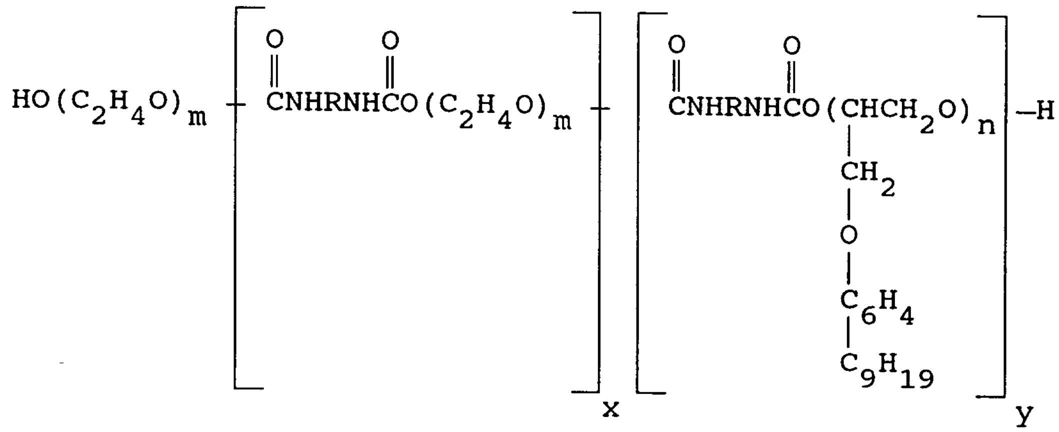

hat, worin R eine bivalente organische Gruppe ist, ausgewählt aus der Gruppe bestehend aus Alkylen, Arylen, Alkenylen, Alklarylen, Aralkylen, Cycloalkylen und Cycloalkenylen; m eine Zahl mit einem Durchschnittswert von etwa 90 bis etwa 320 ist; n eine Zahl mit einem Durchschnittswert von mindestens etwa 1 ist; x eine Zahl mit einem Durchschnittswert von größer als etwa 1 ist; und y eine Zahl mit einem Durchschnittswert von größer als etwa 1 ist.

4. Verfahren nach Anspruch 3, worin R eine Cycloalkylengruppe der Formel:

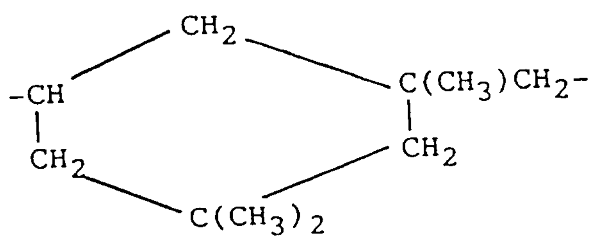

ist;
m einen Durchschnittswert von etwa 180 bis etwa 230 hat;
n eine Zahl mit einem Durchschnittswert von größer als etwa 1 bis etwa 30 ist; x einen Durchschnittswert von etwa 5 bis etwa 25 hat; und y einen Durchschnittswert von größer als etwa 1 bis etwa 10 hat.

5. Verfahren nach einem oder mehreren der Ansprüche 1 bis 4, worin das besagte polymere assoziierende Verdickungsmittel in einer Menge von etwa 0,01 bis etwa 5 Gew.-%, bezogen auf die Feststoffteilchen, anwesend ist.

6. Verfahren nach einem oder mehreren der Ansprüche 1 bis 5, worin die Polymerisation in Gegenwart eines nichtionischen Tensids durchgeführt wird.

7. Verfahren nach Anspruch 6, worin das besagte nichtionische Tensid in einer Menge von etwa 1 bis etwa 20 Gew.-%, bezogen auf die Feststoffteilchen, anwesend ist.

8. Verfahren nach den Ansprüchen 6 oder 7, worin das besagte nichtionische Tensid eine hydrophile Kette und eine hydrophobe Endgruppe pro Molekül umfaßt.

9. Verfahren nach einem oder mehreren der Ansprüche 1 bis 8, worin die besagte Dispersion in Gegenwart mindestens eines anionischen Dispergiermittels bereitet wird.

**10.** Verfahren nach Anspruch 9, worin das besagte anionische Dispergiermittel in einer Menge von etwa 0,1 bis etwa 10 Gew.-%, bezogen auf die Feststoffteilchen, anwesend ist.

**11.** Verfahren nach einem oder mehreren der Ansprüche 1 bis 10, worin das besagte anionische Dispergiermittel ein Acryl-Polymer mit einer Kohlenstoff-Kohlenstoff-Hauptkette sowie Carboxyl-haltigen- und Carbonsäureester-haltigen Seitengruppen, die an die besagte hydrophile Hauptkette gebunden sind, umfaßt.

**12.** Verfahren nach einem oder mehreren der Ansprüche 1 bis 11, worin zur Bereitung der besagten Dispersion ein Mischvorgang mit großen Scherkräften verwendet wird.

**13.** Verfahren nach einem oder mehreren der Ansprüche 1 bis 12, worin die Feststoffteilchen einen mittleren Durchmesser von weniger als 2 $\mu$m aufweisen.

**14.** Verfahren nach einem oder mehreren der Ansprüche 1 bis 13, worin die besagten Schritte der Dispersionsbereitung und Polymerisierung gleichzeitig im selben Gefäß durchgeführt werden.

**15.** Verfahren nach einem oder mehreren der Ansprüche 1 bis 14, worin der besagte Dispersionsschritt und wahlweise auch der Polymerisierungsschritt in Gegenwart von bis zu 50 Gew.-% Propylenglycol, bezogen auf die Feststoffteilchen, durchgeführt wird.

**16.** Verfahren nach einem oder mehreren der Ansprüche 1 bis 15, worin die besagten Feststoffteilchen $TiO_2$-Teilchen sind.

**17.** Verfahren nach einem oder mehreren der Ansprüche 1 bis 16, worin das besagte hydrophobe Polymer durch Copolymerisierung von Vinylacetat und tert.-Butylacrylat gebildet wird.

**18.** Stabile wäßrige Dispersion umfassend in einer wäßrigen Phase dispergierte Feststoffteilchen mit einem mittleren Teilchendurchmesser von weniger als 2 $\mu$m, die auf ihrer Oberfläche eine Beschichtung aus einem hydrophoben Polymer aufweisen, in welcher die Teilchen durch ein polymeres assoziierendes Verdickungsmittel stabilisiert werden, das ein Polymer umfaßt, das ein massengemitteltes Molekulargewicht von mindestens etwa 10 000 und in einem durchschnittlichen Molekül eine hydrophile Hauptkette und im Durchschnitt mehr als eine an die besagte hydrophile Hauptkette gebundene hydrophobe Seitengruppe aufweist, wobei das besagte polymere assoziierende Verdickungsmittel in einer zur Teilchenstabilisierung ausreichenden Menge anwesend ist, sowie ein nichtionisches Tensid in einer Menge, die zur Bereitung einer stabilen Dispersion ausreicht.

**19.** Stabile wäßrige Dispersion nach Anspruch 18, worin das besagte polymere assoziierende Verdickungsmittel in einer Menge von etwa 0,01 bis etwa 5 Gew.-%, bezogen auf die Feststoffteilchen, anwesend ist, und das besagte nichtionische Tensid in einer Menge von etwa 1 bis etwa 20 Gew.-%, bezogen auf die Feststoffteilchen, anwesend ist.

**20.** Stabile wäßrige Dispersion nach den Ansprüchen 18 oder 19, worin die besagten Feststoffteilchen $TiO_2$-Teilchen sind.

**21.** Stabile wäßrige Dispersion nach einem oder mehreren der Ansprüche 18 bis 20, worin das besagte polymere assoziierende Verdickungsmittel eine hydrophile Hauptkette umfaßt, die eine Polyoxyethylen-Kette umfaßt, sowie hydrophobe Gruppen, die an die besagte hydrophile Hauptkette gebundene Octylphenoxy- und/oder Nonylphenoxy-Gruppen umfassen.

**22.** Stabile wäßrige Dispersion nach einem oder mehreren der Ansprüche 18 bis 21, worin das besagte polymere assoziierende Verdickungsmittel hydrophobe Seitengruppen umfaßt, die an die besagte hydrophile Hauptkette an auseinanderliegenden Kohlenstoffatomen in Mittelstellung in der besagten hydrophilen Hauptkette gebunden sind.

**23.** Stabile wäßrige Dispersion nach einem oder mehreren der Ansprüche 18 bis 22, worin das besagte polymere assoziierende Verdickungsmittel die Formel:

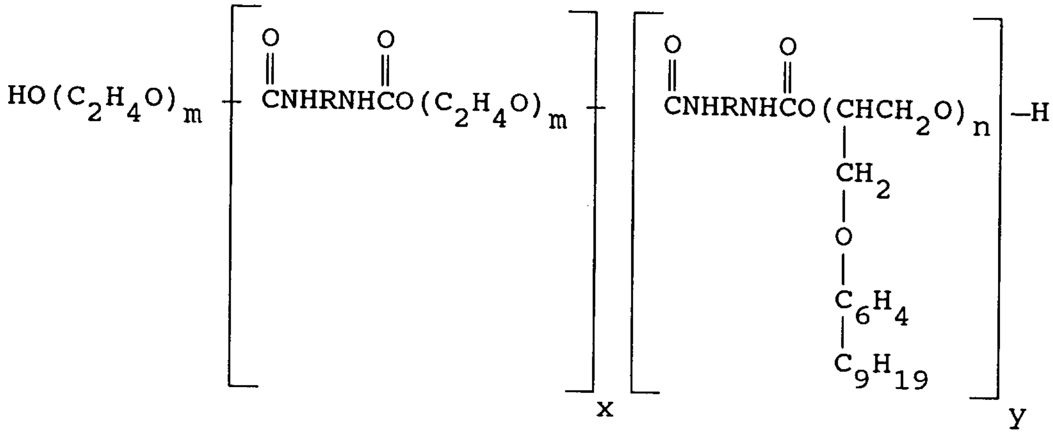

hat, worin R eine bivalente organische Gruppe ist, ausgewählt aus der Gruppe bestehend aus Alkylen, Arylen, Alkenylen, Alklarylen, Aralkylen, Cycloalkylen und Cycloalkenylen; m eine Zahl mit einem Durchschnittswert von etwa 90 bis etwa 320 ist; n eine Zahl mit einem Durchschnittswert von größer als etwa 1 ist; x eine Zahl mit einem Durchschnittswert von größer als etwa 1 ist; und y eine Zahl mit einem Durchschnittswert von größer als etwa 1 ist.

**24.** Stabile wäßrige Dispersion nach einem oder mehreren der Ansprüche 18 bis 23, worin R eine Cycloalkylengruppe der Formel:

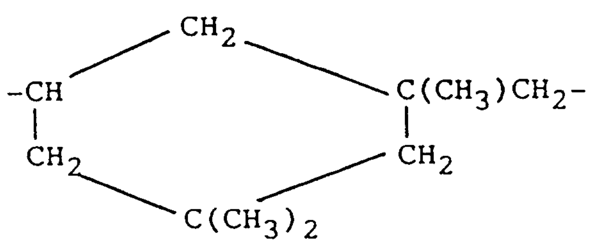

ist;
m einen Durchschnittswert von etwa 180 bis etwa 230 hat;
n eine Zahl mit einem Durchschnittswert von größer als etwa 1 bis etwa 30 ist; x einen Durchschnittswert von etwa 5 bis etwa 25 hat; und y einen Durchschnittswert von größer als etwa 1 bis etwa 10 hat.

**25.** Stabile wäßrige Dispersion nach einem oder mehreren der Ansprüche 18 bis 24, worin das besagte polymere assoziierende Verdickungsmittel in einer Menge von etwa 0,01 bis etwa 5 Gew.-%, bezogen auf die Feststoffteilchen, anwesend ist, und das besagte nichtionische Tensid in einer Menge von etwa 1 bis etwa 20 Gew.-%, bezogen auf die Feststoffteilchen, anwesend ist.

**26.** Stabile wäßrige Dispersion nach einem oder mehreren der Ansprüche 18 bis 25, worin die besagten hydrophoben Gruppen des besagten polymeren assoziierenden Verdickungsmittels endständige hydrophobe Gruppen sind.

**27.** Verbundstoff, der ein festes Substrat mit einer darauf befindlichen Beschichtung umfaßt, wobei die besagte Beschichtung hydrophobes Polymer umfaßt, das mit polymerem assoziierendem Verdickungsmittel dispergiert ist, wobei das besagte polymere assoziierende Verdickungsmittel ein Polymer umfaßt, das ein massengemitteltes Molekulargewicht von mindestens etwa 10 000 und in einem durchschnittlichen Molekül eine hydrophile Hauptkette und im Durchschnitt mehr als eine an die besagte hydrophile Hauptkette gebundene hydrophobe Seitengruppe aufweist.

**28.** Verbundstoff nach Anspruch 27, worin das Substrat feste Teilchen einer in einem flüssigen Medium dispergierbaren Größe umfaßt.

**29.** Zusammensetzung, die ein flüssiges Lösemittel mit darin dispergierten Verbundstoffteilchen nach den Ansprüchen 27 oder 28 und wahlweise mindestens eine zur Bildung einer Beschichtung auf einem Substrat geeignete polymere Verbindung umfaßt.

**30.** Verfahren zur Herstellung eines Verbundstoffs, das umfaßt, daß man:

(a) mit einem wäßrigen Medium in Berührung bringt: (i) ein festes Substrat, das eine zum Adsorbieren von hydrophilen Polymeren geeignete Oberfläche besitzt, (ii) eine zur Verbesserung der Kompatibilität der Oberfläche mit lipophilen Komponenten ausreichende Menge eines polymeren assoziierenden Verdickungsmittels, wobei das besagte polymere assoziierende Verdickungsmittel ein Polymer umfaßt, das ein massengemitteltes Molekulargewicht von mindestens etwa 10000 und in einem durchschnittlichen Molekül eine hydrophile Hauptkette und im Durchschnitt mehr als eine an die besagte hydrophile Hauptkette gebundene hydrophobe Seitengruppe aufweist, und (iii) mindestens eine zur Bildung eines hydrophoben Polymers geeignete, polymerisierbare Komponente; und

(b) diese (mindestens eine) polymerisierbare Komponente aus dem besagten wäßrigen Medium polymerisiert, um eine hydrophobe Beschichtung auf dem besagten Substrat zu bilden und den besagten Verbundstoff bereitzustellen.

**31.** Verfahren nach Anspruch 30, worin das besagte polymere assoziierende Verdickungsmittel in einer zur Erhöhung der Umhüllungs-Effizienz auf mindestens 85 Prozent, insbesondere auf mindestens etwa 90 Prozent, ausreichenden Menge anwesend ist.

**32.** Verfahren nach den Ansprüchen 30 oder 31, worin das Substrat in Form fester Teilchen vorliegt, deren Durchmesser weniger als etwa 2 µm beträgt, wobei die besagten Teilchen in dem besagten wäßrigen Medium dispergierbar sind und im Laufe des Verfahrens dort dispergiert werden.

**33.** Verfahren nach einem oder mehreren der Ansprüche 30 bis 32, worin das besagte wäßrige Medium zusätzlich nichtionisches oder anionisches Tensid in einer zur Erhöhung der Umhüllungs-Effizienz ausreichenden Menge umfaßt.

**34.** Verfahren nach einem oder mehreren der Ansprüche 30 bis 33, worin die Substratteilchen Titandioxid umfassen und die hydrophobe Polymer-Beschichtung eine zur Erhöhung der Deckkraft des Titandioxids in einer Farbzusammensetzung ausreichende Dicke aufweist.

**35.** Umhülltes, im Verfahren nach Anspruch 1 erhaltenes Teilchen, welches ein Teilchen umfaßt, das an seiner Oberfläche ein polymeres assoziierendes Verdickungsmittel an der hydrophilen Hauptkette dieses besagten Verdickungsmittels adsorbiert hat, wobei das besagte assoziierende Verdickungsmittel im Durchschnitt mehr als eine an die besagte hydrophile Hauptkette gebundene hydrophobe Seitengruppe aufweist, und wobei das besagte Teilchen eine äußere Beschichtung eines hydrophoben Polymers aufweist.

**36.** Umhülltes Teilchen nach Anspruch 35, worin das Teilchen Titandioxid ist.

**37.** Umhülltes Teilchen nach den Ansprüchen 35 oder 36, worin das polymere assoziierende Verdickungsmittel eine hydrophile Polyoxyethylen-Hauptkette und mindestens eine der hydrophoben Octylphenoxy- und Nonylphenoxy-Seitengruppen besitzt.

**38.** Umhülltes Teilchen nach einem oder mehreren der Ansprüche 35 oder 37, worin das besagte Teilchen einen Durchmesser von weniger als etwa 2 µm aufweist und das besagte assoziierende Verdickungsmittel ein massengemitteltes Molekulargewicht von mindestens etwa 10 000 aufweist.

**39.** Umhülltes Teilchen nach einem oder mehreren der Ansprüche 35 oder 38, worin das besagte polymere assoziierende Verdickungsmittel die Formel:

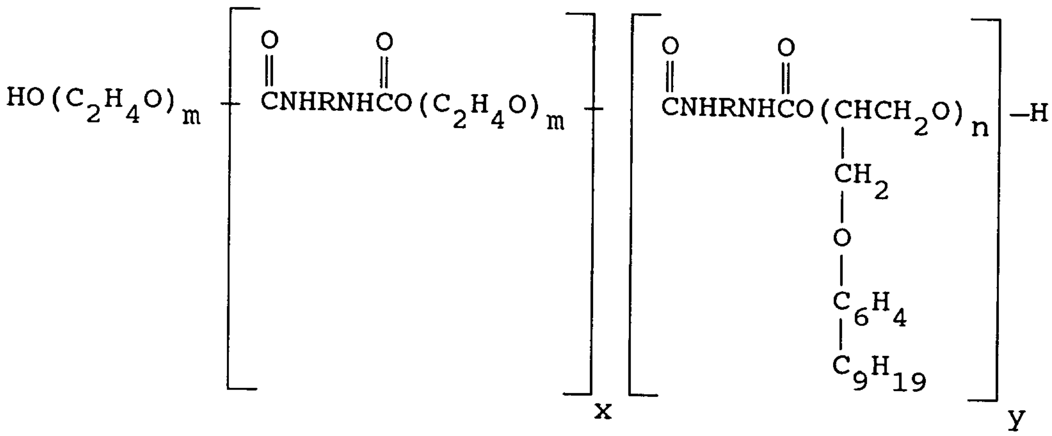

hat, worin R eine bivalente organische Gruppe ist, ausgewählt aus der Gruppe bestehend aus Alkylen, Arylen, Alkenylen, Alklarylen, Aralkylen, Cycloalkylen und Cycloalkenylen; m einen Durchschnittswert von etwa 90 bis etwa 320 hat; n einen Durchschnittswert von größer als etwa 1 hat; x einen Durchschnittswert von größer als etwa 1 hat; und y einen Durchschnittswert von größer als etwa 1 hat.

**40.** Umhülltes Teilchen nach Anspruch 39, worin R eine Cycloalkylengruppe der Formel:

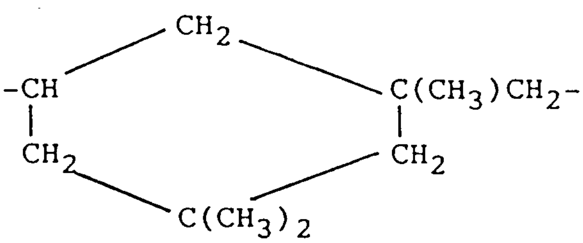

ist;
m einen Durchschnittswert von etwa 180 bis etwa 230 hat;
n einen Durchschnittswert von größer als etwa 1 bis etwa 30 hat; x einen Durchschnittswert von etwa 5 bis etwa 25 hat; und y einen Durchschnittswert von größer als etwa 1 bis etwa 10 hat.

**41.** Wäßrige Dispersion, die umhüllte Teilchen nach den Ansprüchen 35 bis 40 enthält.

**Revendications**

**1.** Procédé de préparation de dispersions aqueuses stables de matières solides en particules insolubles dans l'eau, lesdites particules ayant une surface hydrophile et portant un revêtement d'un polymère hydrophobe adhérant à ladite surface, comprenant les étapes de formation d'une dispersion des matières solides en particules dans de l'eau en présence d'un épaississant associatif polymérique en une quantité suffisante pour provoquer une stabilisation des particules et pour créer une zone hydrophobe au niveau de ladite surface, ledit épaississant associatif comprenant un polymère ayant une moyenne pondérale du poids moléculaire d'au moins environ 10 000 et, dans la molécule moyenne, un squelette hydrophile et un nombre moyen supérieur à un de groupes hydrophobes latéraux connectés audit squelette hydrophile, et de polymérisation d'au moins un monomère ou prépolymère polymérisable en un polymère hydrophobe dans ladite dispersion aqueuse en présence dudit épaississant associatif polymérique, le polymère hydrophobe revêtant les particules au niveau de leur surface dans la zone hydrophobe.

**2.** Procédé suivant la revendication 1, dans lequel l'épaississant associatif comprend des groupes hydrophobes étagés, par exemple des groupes hydrophobes terminaux connectés au squelette hydrophile.

**3.** Procédé suivant la revendication 2, dans lequel l'épaississant associatif polymérique répond à la formule :

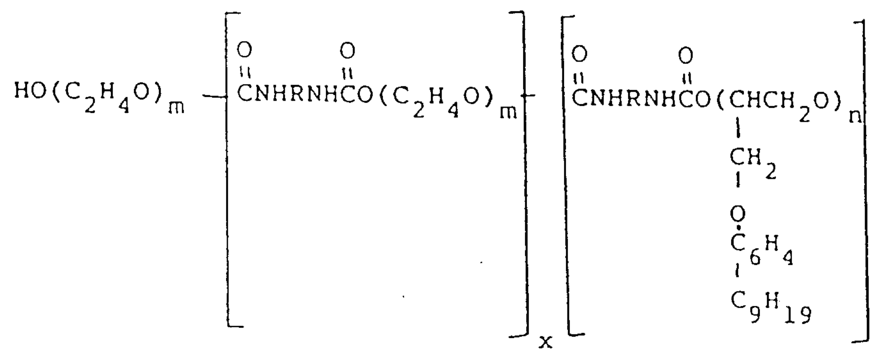

dans laquelle R représente un groupe organique divalent choisi dans la catégorie consistant en groupes alkylène, arylène, alcénylène, alcarylène, aralkylène, cycloalkylène et cycloalcénylène ; m est un nombre ayant une valeur moyenne d'environ 90 à environ 320 ; n est un nombre ayant une valeur moyenne d'au moins environ 1 ; x est un nombre ayant une valeur moyenne supérieure à environ 1, et y est un nombre ayant une valeur moyenne supérieure à environ 1.

**4.** Procédé suivant la revendication 3, dans lequel R représente un groupe cycloalkylène répondant à la formule :

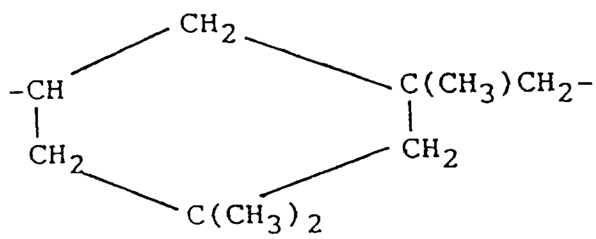

m a une valeur moyenne d'environ 180 à environ 230 ; n est un nombre ayant une valeur moyenne supérieure à environ 1 et allant jusqu'à 30 ; x possède une valeur moyenne d'environ 5 à environ 25, et y possède une valeur moyenne supérieure à environ 1 et allant jusqu'à 10.

**5.** Procédé suivant une ou plusieurs des revendications 1 à 4, dans lequel l'épaississant associatif polymérique est présent en une quantité d'environ 0,01 à environ 5 % en poids des matières solides en particules.

**6.** Procédé suivant une ou plusieurs des revendications 1 à 5, dans lequel la polymérisation est effectuée en présence d'un surfactant non-ionique.

**7.** Procédé suivant la revendication 6, dans lequel le surfactant non-ionique est présent en une quantité d'environ 1 à environ 20 % en poids des matières solides en particules.

**8.** Procédé suivant la revendication 6 ou 7, dans lequel le surfactant non-ionique comprend une chaîne hydrophile et un groupe terminal hydrophobe par molécule.

**9.** Procédé suivant une ou plusieurs des revendications 1 à 8, dans lequel la dispersion est formée en présence d'au moins un dispersant anionique.

**10.** Procédé suivant la revendication 9, dans lequel le dispersant anionique est présent en une quantité d'environ 0,1 à environ 10 % en poids des matières solides en particules.

**11.** Procédé suivant une ou plusieurs des revendications 1 à 10, dans lequel le dispersant anionique compend un polymère acrylique ayant un squelette carbone-carbone et des groupes latéraux à fonction carboxyle ainsi que des groupes à fonction ester carboxylique fixés audit squelette.

**12.** Procédé suivant une ou plusieurs des revendications 1 à 11, dans lequel un mélange dans des conditions de fort cisaillement est utilisé dans la formation de la dispersion.

**13.** Procédé suivant une ou plusieurs des revendications 1 à 12, dans lequel les matières solides en particules possèdent un diamètre moyen inférieur à 2 µm.

**14.** Procédé suivant une ou plusieurs des revendications 1 à 13, dans lequel les étapes de formation d'une dispersion et de polymérisation sont mises en oeuvre conjointement dans le même récipient.

**15.** Procédé suivant une ou plusieurs des revendications 1 à 14, dans lequel l'étape de dispersion et, facultativement, l'étape de polymérisation également sont mises en oeuvre en présence d'une quantité allant jusqu'à 50 %, en poids des matières solides en particules, de propylèneglycol.

**16.** Procédé suivant une ou plusieurs des revendications 1 à 15, dans lequel les matières solides en particules sont des particules de $TiO_2$.

**17.** Procédé suivant une ou plusieurs des revendications 1 à 16, dans lequel le polymère hydrophobe est formé par copolymérisation d'acétate de vinyle et d'acrylate de tertio-butyle.

**18.** Dispersion aqueuse stable comprenant, à l'état dispersé dans une phase aqueuse des matières solides en particules ayant un diamètre moyen de particules inférieur à 2 µm portant sur leur surface un revêtement d'un polymère hydrophobe, dans laquelle les particules sont stabilisées par un épaississant associatif polymérique comprenant un polymère ayant une moyenne pondérale du poids moléculaire d'au moins 10 000 et, dans la molécule moyenne, un squelette hydrophile et un nombre moyen supérieur à un de groupes hydrophobes latéraux liés audit squelette hydrophile, ledit épaississant associatif polymérique étant présent en une quantité suffisante pour provoquer une stabilisation des particules, et un surfactant non ionique en une quantité suffisante pour former une dispersion aqueuse stable des matières solides en particules.

**19.** Dispersion aqueuse stable suivant la revendication 18, dans laquelle l'épaississant associatif polymérique est présent en une quantité d'environ 0,01 à environ 5 % en poids des matières solides en particules et le surfactant non ionique est présent en une quantité d'environ 1 à environ 20 % en poids des matières solides en particules.

**20.** Dispersion aqueuse stable suivant la revendication 18 ou 19, dans laquelle les matières solides en particules sont des particules de $TiO_2$.

**21.** Dispersion aqueuse stable suivant une ou plusieurs des revendications 18 à 20, dans laquelle l'épaississant associatif polymérique comprend un squelette hydrophile renfermant une chaîne polyoxyéthylène et des groupes hydrophobes comprenant des groupes octylphénoxy et/ou nonylphénoxy connectés audit squelette hydrophile.

**22.** Dispersion aqueuse stable suivant une ou plusieurs des revendications 18 à 21, dans laquelle l'épaississant associatif polymérique comprend des groupes hydrophobes latéraux connectés au squelette hydrophile au niveau d'atomes de carbone intermédiaires espacés dudit squelette.

**23.** Dispersion aqueuse stable suivant une ou plusieurs des revendications 18 à 22, dans laquelle l'épaississant associatif polymérique répond à la formule

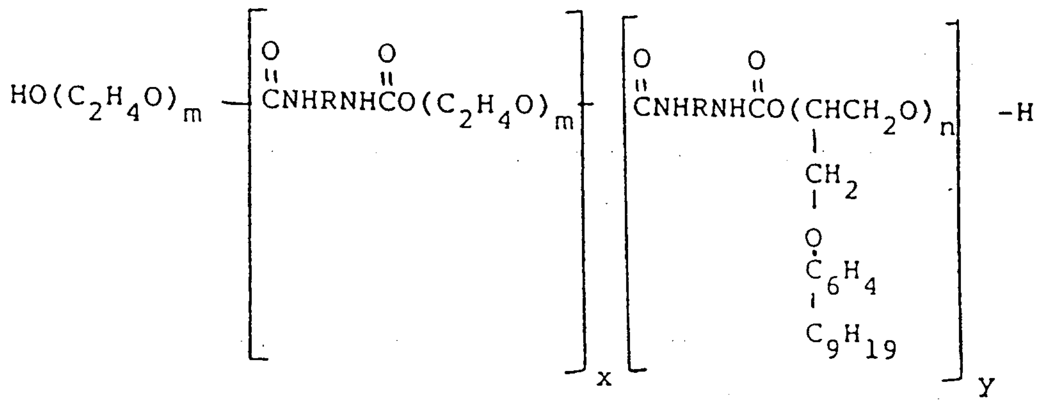

dans laquelle R représente un groupe organique divalent choisi dans la catégorie consistant en groupes alkylène, arylène, alcénylène, alcarylène, aralkylène, cycloalkylène et cycloalcénylène ; m est un nombre ayant une valeur moyenne d'environ 90 à environ 320 ; n est un nombre ayant une valeur moyenne d'au moins environ 1 ; x est un nombre ayant une valeur moyenne supérieure à environ 1, et y est un nombre ayant une valeur moyenne supérieure à environ 1.

**24.** Dispersion aqueuse stable suivant une ou plusieurs des revendications 18 à 23, dans laquelle R représente un groupe cycloalkylène répondant à la formule :

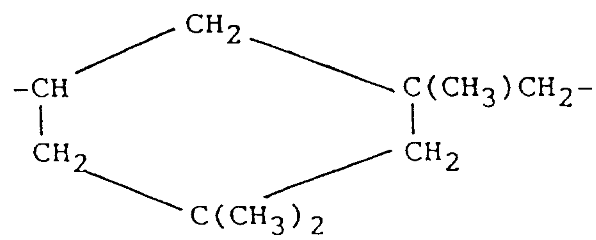

m a une valeur moyenne d'environ 180 à environ 230 ; n est un nombre ayant une valeur moyenne supérieure à environ 1 et allant jusqu'à environ 30 ; x possède une valeur moyenne d'environ 5 à environ 25, et y possède une valeur moyenne supérieure à environ 1 et allant jusqu'à environ 10.

**25.** Dispersion aqueuse stable suivant une ou plusieurs des revendications 18 à 24, dans laquelle l'épaississant associatif polymérique est présent en une quantité d'environ 0,01 à environ 5 % en poids des matières solides en particules et le surfactant non ionique est présent en une quantité d'environ 1 à environ 20 % en poids des matières solides en particules.

**26.** Dispersion aqueuse stable suivant une ou plusieurs des revendications 18 à 25, dans laquelle les groupes hydrophobes de l'épaississant associatif polymérique sont des groupes hydrophobes terminaux.

**27.** Composite comprenant un substrat solide portant un revêtement, ledit revêtement comprenant un polymère hydrophobe renfermant à l'état dispersé un épaississant associatif polymérique, ledit épaississant associatif polymérique comprenant un polymère ayant une moyenne pondérale du poids moléculaire d'au moins environ 10 000 et, dans la molécule moyenne, un squelette hydrophile et un nombre moyen supérieur à un de groupes hydrophobes latéraux connectés audit squelette hydrophile.

**28.** Composite suivant la revendication 27, dans lequel le substrat est constitué de particules solides ayant un diamètre permettant la dispersion de ces particules dans un milieu liquide.

**29.** Composition comprenant un mélange réactionnel liquide renfermant à l'état dispersé des particules composites suivant la revendication 27 ou 28 et, facultativement, au moins un composé polymérique

capable de former un revêtement sur un substrat.

**30.** Procédé de production d'un composite, comprenant :

(a) la mise en contact avec un milieu aqueux (i) d'un substrat solide, ledit substrat solide ayant une surface capable d'adsorber des polymères hydrophiles, (ii) d'une quantité d'un épaississant associatif polymérique suffisante pour accroître la compatibilité de la surface avec des constituants lipophiles, ledit épaississant associatif polymérique comprenant un polymère ayant une moyenne pondérale du poids moléculaire d'au moins environ 10 000 et, dans la molécule moyenne un squelette hydrophile et un nombre moyen supérieur à un de groupes hydrophobes latéraux connectés audit squelette hydrophile, et (iii) d'au moins un constituant polymérisable capable de former un polymère hydrophobe ; et

(b) la polymérisation dudit constituant polymérisable d'au moins un type dans ledit milieu aqueux pour former un revêtement hydrophobe sur ledit substrat et produire ladite composition.

**31.** Procédé suivant la revendication 30, dans lequel l'épaississant associatif polymérique est présent en une quantité suffisante pour accroître l'efficacité d'encapsulation en la portant à une valeur d'au moins 85 pour cent, notamment d'au moins environ 90 pour cent.

**32.** Procédé suivant la revendication 30 ou 31, dans lequel le substrat est sous forme de particules solides qui possèdent un diamètre inférieur à environ 2 µm, lesdites particules étant capables d'être dispersées et sont dispersées dans ledit milieu aqueux au cours de la mise en oeuvre du procédé.

**33.** Procédé suivant une ou plusieurs des revendications 30 à 32, dans lequel le milieu aqueux comprend en outre un surfactant non ionique ou anionique en une quantité suffisante pour accroître l'efficacité d'encapsulation.

**34.** Procédé suivant une ou plusieurs des revendications 30 à 33, dans lequel les particules du substrat comprennent du dioxyde de titane, et le revêtement de polymère hydrophobe possède une épaisseur suffisante pour accroître le pouvoir couvrant du dioxyde de titane dans une composition de peinture.

**35.** Particule encapsulée, telle qu'obtenue au cours de la mise en oeuvre du procédé suivant la revendication 1, consistant en une particule portant à l'état adsorbé sur sa surface un épaississant associatif polymérique par le squelette hydrophile dudit épaississant, ledit épaississant associatif polymérique contenant en moyenne plus d'un groupe hydrophobe latéral lié audit squelette hydrophile, ladite particule portant un revêtement extérieur d'un polymère hydrophobe.

**36.** Particule encapsulée répondant à la définition suivant la revendication 35, ladite particule étant une particule de dioxyde de titane.

**37.** Particule encapsulée répondant à la définition suivant la revendication 35 ou 36, dans laquelle l'épaississant associatif polymérique possède un squelette hydrophile de polyoxyéthylène et au moins un groupe choisi entre des groupes latéraux hydrophobes octylphénoxy et nonylphénoxy.

**38.** Particule encapsulée répondant à la définition suivant une ou plusieurs des revendications 35 et 37, ladite particule possédant un diamètre inférieur à environ 2 µm et l'épaississant associatif polymérique possédant une moyenne pondérale du poids moléculaire d'au moins environ 10 000.

**39.** Particule encapsulée répondant à la définition suivant une ou plusieurs des revendications 35 et 38, dans laquelle l'épaississant associatif polymérique répond à la formule :

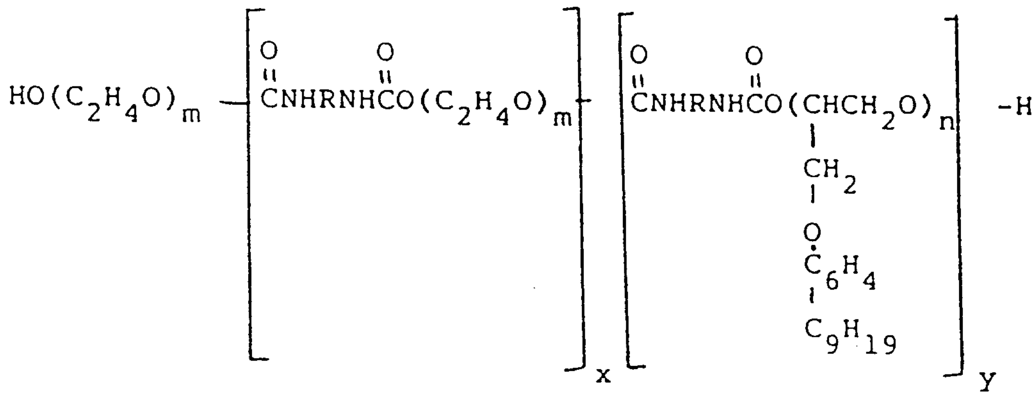

dans laquelle R représente un groupe organique divalent choisi dans la catégorie consistant en groupes alkylène, arylène, alcénylène, alcarylène, aralkylène, cycloalkylène et cycloalcénylène ; m est un nombre ayant une valeur moyenne d'environ 90 à environ 320 ; n est un nombre ayant une valeur moyenne d'au moins environ 1 ; x est un nombre ayant une valeur moyenne supérieure à environ 1, et y est un nombre ayant une valeur moyenne supérieure à environ 1.

**40.** Particule encapsulée répondant à la définition suivant la revendication 39, dans laquelle R représente un groupe cycloalkylène répondant à la formule :

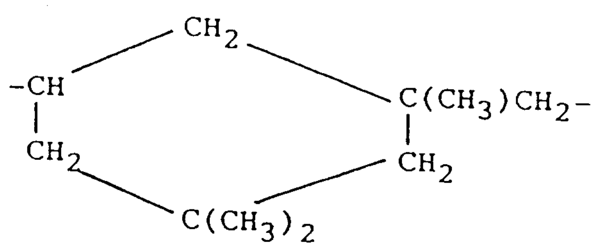

m a une valeur moyenne d'environ 180 à environ 230 ; n a une valeur moyenne supérieure à environ 1 et allant jusqu'à environ 30 ; x a une valeur moyenne d'environ 5 à environ 25, et y a une valeur moyenne supérieure à environ 1 et allant jusqu'à environ 10.

**41.** Dispersion aqueuse contenant des particules encapsulées répondant à la définition suivant les revendications 35 à 40.

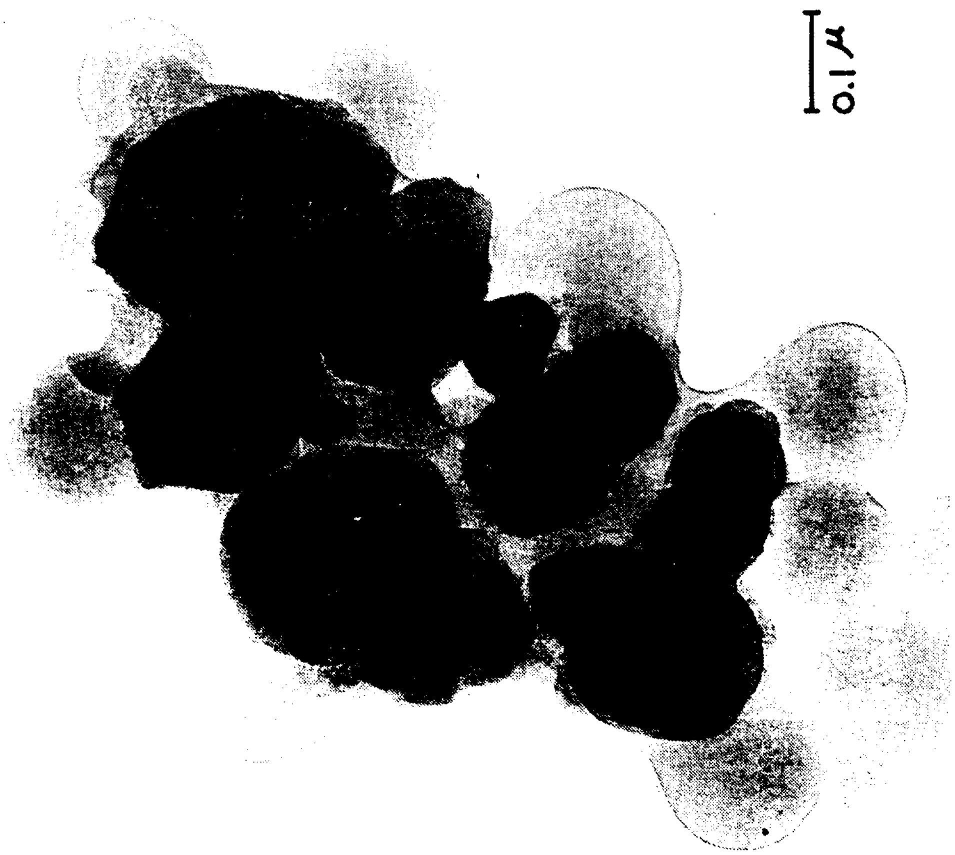


F I G. 1

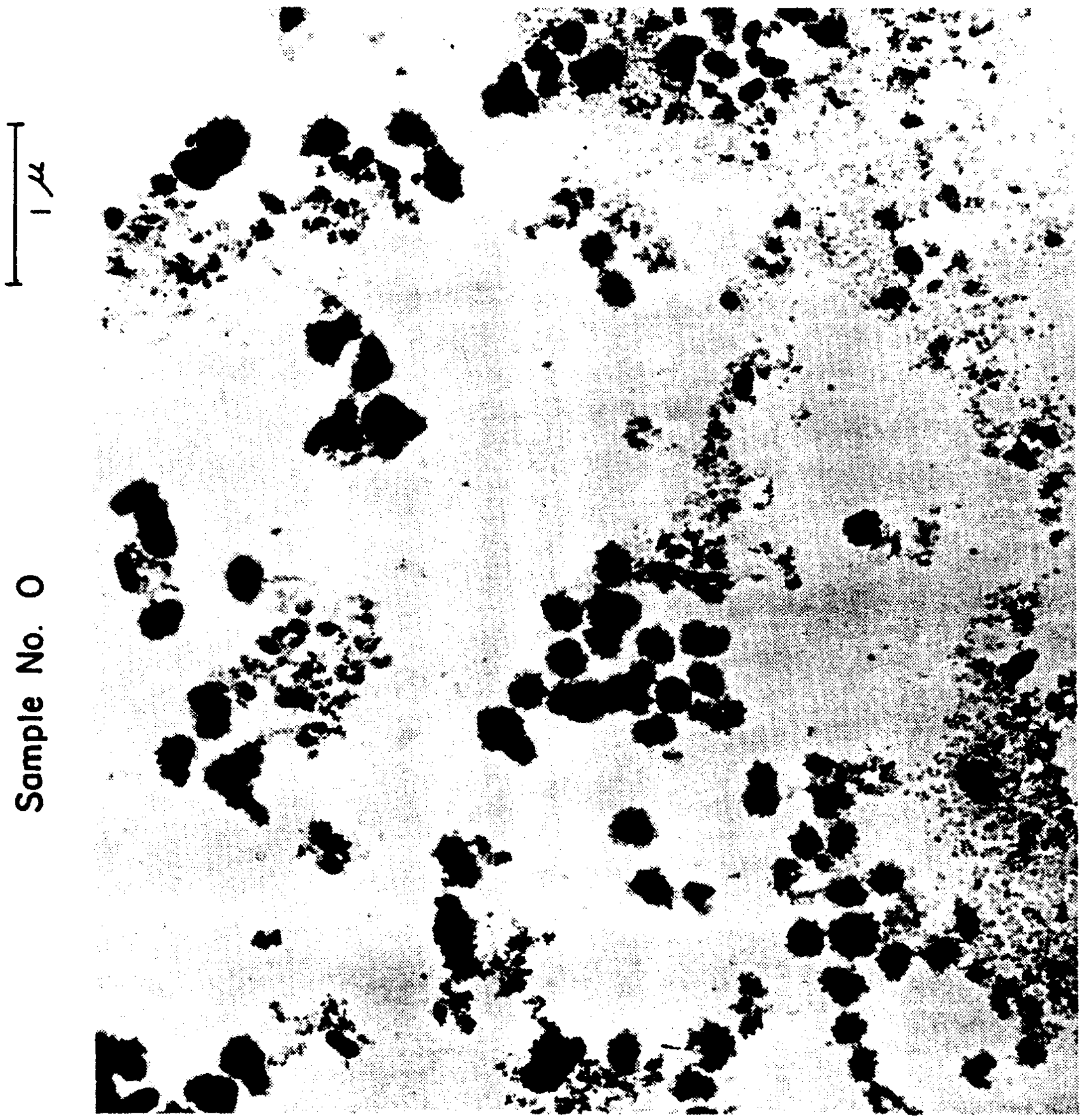


FIG. 2